# EUROPEAN PATENT APPLICATION

(11) **EP 4 443 986 A1**
(43) Date of publication of application: **09.10.2024**
(21) Application number: 22915164.2
(22) Date of filing: 30.12.2022
(51) Int. Cl.: H04W 52/02, H04W 72/04

(54) **DISCONTINUOUS RECEPTION SCHEDULING METHOD AND DEVICE**

(30) Priority: 31.12.2021 CN 202111666562
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHAI, Li, Beijing 100032 (CN)
(74) Representative: Weickmann & Weickmann PartmbB
(86) International application number: PCT/CN2022/143853
(87) International publication number: WO 2023/125915

(57) **Abstract**

The present disclosure provides a discontinuous reception scheduling method and device. The method includes: receiving, by a first user equipment (UE), m sets of DRX configuration information configured by a network side; wherein m is an integer greater than or equal to 1, and the m sets of DRX configuration information have a correspondence relationship including at least one of the following: the m sets of DRX configuration information correspond to different communication types; the m sets of DRX configuration information correspond to different service types; the m sets of DRX configuration information correspond to different scheduling modes; the m sets of DRX configuration information correspond to different frame types or data types of a service; the m sets of DRX configuration information correspond to different communication directions of a service or different services.

## Description

### CROSS-REFERENCE TO RELATED APPLICATION

The present application is filed based on and claims the priority of Chinese Application No. 202111666562.6 filed on December 31, 2021, the disclosure of which are incorporated in their entireties by reference herein.

### TECHNICAL FIELD

The present disclosure relates to the field of mobile communication technologies, and in particular to a discontinuous reception scheduling method and device.

### BACKGROUND

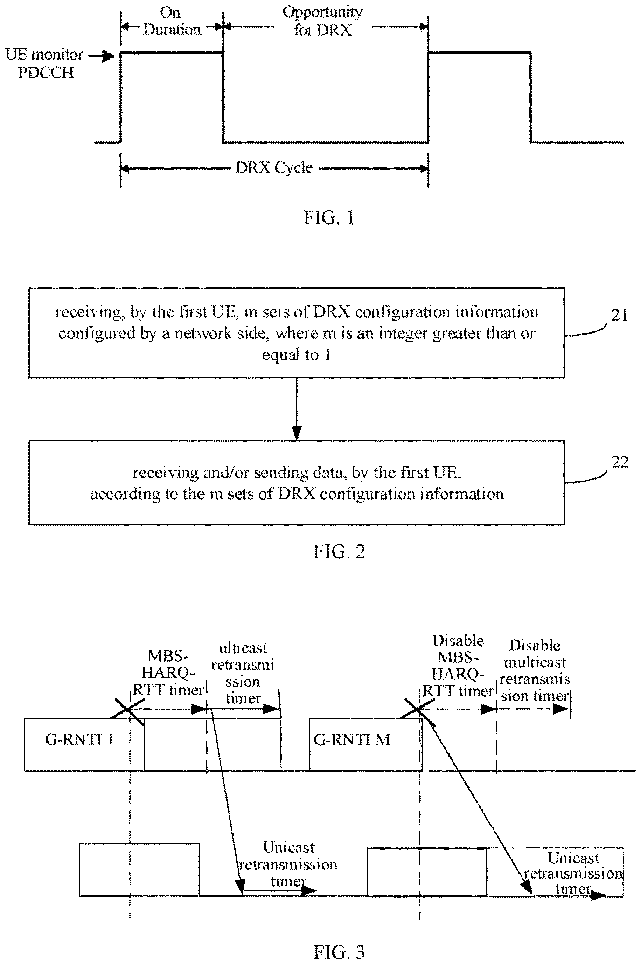

Packet-based data streams are usually bursty. When there is no data transmission, power consumption can be reduced by turning off a receiving circuit of a user equipment (UE), and thus discontinuous reception (DRX) technology is introduced. The basic mechanism of DRX is to configure a DRX cycle for the UE in an RRC-connected state (RRC_connected). As shown in FIG. 1, the DRX cycle generally includes an active time (and/or on duration) and an inactive time. During the active time, the UE wakes up and monitors physical downlink control channel (PDCCH) (the active time can also be referred as activated time); during the inactive time (opportunity for DRX), the UE no longer receives PDCCH, but can receive data of other physical channels, such as physical downlink shared channel (PDSCH) and positive acknowledgment (ACK)/negative acknowledgment (NACK) (the inactive time can also be referred as dormancy time).

The network may send DRX parameters to the UE through RRC connection reconfiguration (RRCconnectionReconfig) signaling or RRC connection setup (RRCconnectionSetup). The DRX parameters usually include several basic timers: 1) onDurationTimer: counting, from the beginning of a DRX cycle, the number of PDCCH subframes that are monitored continuously (i.e., the number of subframes that the activated time lasts); 2) drx-InactivityTimer: the number of consecutive PDCCH subframes that are continuously in the activated state after the UE successfully decodes a PDCCH indicating initial transmission of uplink and downlink data; 3) drx-RetransmissionTimer: the number of PDCCH subframes that the UE continuously monitors, starting from the subframe in which the UE expects to receive a downlink retransmission; 4) longDRX-CycleStartoffset: longDRX-cycle and drxstartffset are specified; 5) shortDRX-cycle: the number of subframes that the shortDRX cycle lasts; 6) drxShortCycleTimer: specifying how long the UE uses short DRX cycle. This value is a multiple of short DRX cycle.

The DRX configuration in the related art is generally designed for each UE, and has nothing to do with factors such as service type and service communication type, an accurate power saving effect is difficult to be achieved.

### SUMMARY

At least one embodiment of the present disclosure provides a discontinuous reception scheduling method and device, which can realize more accurate power saving in discontinuous reception.

In order to solve the above problem, the present disclosure is implemented as follows.

In a first aspect, one embodiment of the present disclosure provides a discontinuous reception (DRX) scheduling method, including:
receiving, by a first user equipment (UE), m sets of DRX configuration information configured by a network side; wherein m is an integer greater than or equal to 1, and the m sets of DRX configuration information have a correspondence relationship including at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to different communication directions of a service or different services;
receiving and/or sending data, by the first UE, according to the m sets of DRX configuration information.

In a second aspect, one embodiment of the present disclosure provides a discontinuous reception (DRX) scheduling method, including:
sending, by a first network device, to a first user equipment (UE), m sets of DRX configuration information; wherein m is an integer greater than or equal to 1, and the m sets of DRX configuration information have a correspondence relationship including at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to different communication directions of a service or different services;
receiving and/or sending data, by the first network device, according to the m sets of DRX configuration information.

In a third aspect, one embodiment of the present disclosure provides a user equipment (UE), including a transceiver and a processor;
wherein the transceiver is configured to receive m sets of DRX configuration information configured by a network side; wherein m is an integer greater than or equal to 1, and the m sets of DRX configuration information have a correspondence relationship including at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to different communication directions of a service or different services;
the processor is configured to receive and/or send data according to the m sets of DRX configuration information.

In a fourth aspect, one embodiment of the present disclosure provides a user equipment (UE), including: a processor, a memory, and a program stored on the memory and executable on the processor; wherein the program, when executed by the processor, causes the UE to perform the steps of the method in the first aspect.

In a fifth aspect, one embodiment of the present disclosure provides a network device, including: a transceiver and a processor. The transceiver is configured to send m sets of DRX configuration information to a first user equipment (UE); wherein m is an integer greater than or equal to 1, and the m sets of DRX configuration information have a correspondence relationship including at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to different communication directions of a service or different services;
the processor is configured to receive and/or send data according to the m sets of DRX configuration information.

In a sixth aspect, one embodiment of the present disclosure provides a network device, including: a processor, a memory, and a program stored on the memory and executable on the processor; wherein the program, when executed by the processor, causes the network device to perform the steps of the method in the second aspect.

In a seventh aspect, one embodiment of the present disclosure provides a computer-readable storage medium, including a computer program stored thereon; wherein the computer program, when executed by a processor, causes the processor to perform the steps of the above method.

Compared with related art, the discontinuous reception scheduling method and device provided by the embodiments of the present disclosure introduce DRX configurations corresponding to factors such as service communication type, service type, scheduling mode, frame type or data type, and service communication direction. Based on the above factors, the network device configures corresponding DRX configuration information for the UE, thereby realizing more accurate discontinuous reception and providing support for better power saving effect.

### BRIEF DESCRIPTION OF THE DRAWINGS

Various other advantages and benefits will become apparent to those of ordinary skill in the art upon reading the following detailed description of the preferred embodiment. The drawings are only for the purpose of illustrating the preferred embodiments and are not to be considered as limiting the present disclosure. Further, throughout the drawings, the same reference numerals are used to designate the same parts. In the attached drawings:
FIG. 1 is a schematic diagram of a DRX cycle in the related art;
FIG. 2 is a flow chart of a discontinuous reception scheduling method applied to UE side according to an embodiment of the present disclosure;
FIG. 3 is a schematic diagram shown an example in which a UE receives new transmission data and retransmission data of a multicast service according to an embodiment of the present disclosure;
FIG. 4 is a flow chart of a discontinuous reception scheduling method applied to network side according to an embodiment of the present disclosure;
FIG. 5 is a schematic diagram of a UE according to an embodiment of the present disclosure;
FIG. 6 is a schematic diagram of a UE according to another embodiment of the present disclosure;
FIG. 7 is a schematic diagram of a network device according to an embodiment of the present disclosure;
FIG. 8 is a schematic diagram of a network device according to another embodiment of the present disclosure;
FIG. 9 is a schematic diagram of a UE according to a still another embodiment of the present disclosure; and
FIG. 10 is a schematic diagram of a network device according to still another embodiment of the present disclosure.

### DETAILED DESCRIPTION

Exemplary embodiments of the present disclosure will be described hereinafter in a clear manner in conjunction with the accompanying drawings. Although exemplary embodiments of the present disclosure are shown in the drawings, it is to be understood that the present disclosure may be embodied in various forms and should not be limited by the embodiments set forth herein. Rather, these embodiments are provided for more thorough understanding of the present disclosure, and to fully convey the scope of the present disclosure to those skilled in the art.

The terms "first", "second" and the like in the in the specification and claims of the present disclosure are used to distinguish similar objects and are not necessarily used to describe a specific order or sequence. It is to be understood that data so used are interchangeable under appropriate circumstances such that the embodiments of the present disclosure described herein are, for example, capable of being implemented in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the specification and claims is used to indicate at least one of connected objects.

The technology described herein is not limited to the NR system and LTE-advanced (LTE-A) system of the Long Time Evolution (LTE), and may also be used in various wireless communication systems, such as Code Division Multiple Access (CDMA), Time Division Multiple Access (TDMA), Frequency Division Multiple Access (FDMA), Orthogonal Frequency Division Multiple Access (OFDMA), Single-carrier Frequency-Division Multiple Access (SC-FDMA) and other systems. The terms "system" and "network" are often used interchangeably. The CDMA system may implement radio technologies such as CDMA2000, Universal Terrestrial Radio Access (UTRA). The UTRA includes Wideband Code Division Multiple Access (WCDMA) and other CDMA variants. The TDMA system can implement radio technologies such as Global System for Mobile Communication (GSM). The OFDMA system can implement radio technologies such as UltraMobile Broadband (UMB), Evolution-UTRA (E-UTRA), IEEE 802.21 (Wi-Fi), IEEE 802.16 (WiMAX), IEEE 802.20, Flash-OFDM. UTRA and E-UTRA are parts of Universal Mobile Telecommunications System (UMTS). LTE and LTE-Advanced (like LTE-A) are new UMTS releases that use E-UTRA. UTRA, E-UTRA, UMTS, LTE, LTE-A and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies. However, the following description describes NR systems for example purposes, and NR terminologies are used in much of the following description, although the techniques are applicable to applications other than NR system applications as well.

The following description provides examples and does not limit the scope, applicability or configuration set forth in the claims. Changes may be made in functions and arrangements of discussed elements without departing from the spirit and scope of the present disclosure. In various examples, various procedures or components may be omitted, replaced, or added as appropriate. For example, methods described may be performed in an order different from that described, and various steps may be added, omitted or combined. Additionally, features described with reference to certain examples may be combined in other examples.

The "service" herein may represent at least one of the following concepts: service, PDU session, Quality of Service (QoS) flow, stream, service data flow, radio bearer, and logical channel. The "data" herein may be one or more of "data packet", "Physical Uplink Share Channel transmission (PUSCH)", "Physical Downlink Share Channel transmission (PDSCH)", "data unit", "transmission" and "transmission block".

The DRX configuration information in the related art is generally designed for each UE, and has nothing to do with factors such as service type and communication type. In scenarios such as multicast, unicast services and multicast services are relatively independent, and the original purpose of DRX technology is to better save power for UEs while not reducing data transmission performance of UEs, that is, not to miss receiving/sending data. Therefore, there is an urgent need for a solution that can provide a more effective DRX mechanism under different service types or communication types.

In order to solve at least one of the above problems, one embodiment of the present disclosure provides a discontinuous reception scheduling method. Referring to FIG. 2, the method is applied to a first UE side and includes:
Step 21: receiving, by the first UE, m sets of DRX configuration information configured by a network side, where m is an integer greater than or equal to 1, wherein correspondence relationship of the m sets of DRX configuration information includes at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to a service or different communication directions of different services.

Here, each set of DRX configuration information generally includes configurations of DRX cycles and related timers.

Step 22, receiving and/or sending data, by the first UE, according to the m sets of DRX configuration information.

Through the above steps, the embodiment of the present disclosure introduces the DRX configuration information corresponding to factors such as service communication type, service type, scheduling mode, frame type or data type, and service communication direction. Based on the above factors, the network device configures corresponding DRX configuration information for the UE, thereby realizing more accurate discontinuous reception and providing support for better power saving effect.

For example, the current communication networks support various service communication types, for example, multicast and unicast. Operations of core network and/or radio access network correspond to different communication types are different. By introducing the DRX configuration information corresponding to different communication types, the embodiments of the present disclosure can implement more fine-grained DRX configuration than related technologies, allowing the UE to choose the corresponding DRX mode to implement the active time and inactive time according to the service that a user is interested in, thereby achieving more precise power saving.

For another example, the current communication network supports various service types, and different QoS requirements lead to different service arrival times and arrival cycles. By introducing the DRX configuration information corresponding to different service types, the embodiments of the present disclosure can implement more fine-grained DRX configuration than related technologies, thereby realizing more accurate power saving.

For another example, semi-static scheduling such as semi-persistent scheduling (SPS) or CG usually uses configured scheduling RNTI (CS-RNTI) to scramble data, while dynamic scheduling generally uses cell RNTI (C-RNTI) to scramble data. In the embodiment of the present disclosure, by introducing the DRX configuration information corresponding to different scheduling modes, it can realize more fine-grained DRX configuration than related technologies, and the UE can save power more accurately on the PDCCH. For example, assuming that the UE only monitors PDCCH scrambled by CS-RNTI during the active time indicated by the first set of DRX configuration information, and only monitors PDCCH scrambled by C-RNTI during the active time indicated by the second set of DRX configuration information. In this way, more accurate discontinuous reception can be achieved, and a better power-saving effect can be achieved.

For another example, the current communication networks support different data streams of the service itself, and different frames have different QoS requirements and importance, service arrival times and arrival cycles may also be different. In the embodiments of the present disclosure, by introducing the DRX configuration information corresponding to different frame types or data types of the service, it can realize more fine-grained DRX configuration than related technologies, so that different power-saving modes can be implemented according to different frame characteristics, thereby saving power more accurately. For example, for XR services, the UE only monitors data of the P frame of XR during the active time indicated by the first set of DRX configuration information; the UE only monitors data of the I frame of XR during the active time indicated by the second set of DRX configuration information; the UE only monitors data fed back by XR's real-time control protocol (RTCP) during the active time indicated by the third set of DRX configuration information, thereby achieving more accurate discontinuous reception and achieving better power saving effect.

For another example, the service type supported by the previous communication network is relatively single, and there is no high requirement for performance (such as delay, reliability), and many interactions between services are handled at the application layer. As a result, since the processing layer is high, the latency is high, the jitter is large, and the wireless resources are wasted. In case that the current communication networks support various service types and there are clear interactive relationships among many services, in the embodiments of the present disclosure, by configuring DRX configuration information corresponding to different communication directions, different power-saving modes can be implemented according to different communication directions of a service or different services, thereby saving power more accurately. For example, one service is a service in an uplink direction, which is responsible for transmitting data from the device to the network side; another service is a service in a downlink direction, which is responsible for information such as receiving information fed back by an application layer of the network side and/or issuing some control commands. There is a clear time relationship between the two services. For example, a start position of the active time of the service in the uplink direction is T1 earlier than a start position of the active time of the service in the downlink direction; a cycle value of the active time of the service in the uplink direction is half of a cycle value of the active time of the service in the downlink direction. After introducing the DRX configuration information corresponding to different communication directions, more accurate discontinuous reception can be achieved and better power saving effect can be achieved.

In the embodiment of the present disclosure, at least b sets of DRX configurations among the m sets of DRX configuration information may have an association relationship, where b is an integer greater than 1 and less than or equal to m. Specifically, the association relationship between the at least b sets of DRX configuration information may be sent to the first UE by the network side through signaling, or may be predefined (for example, defined in a related agreement or pre-agreed), or may be sent to a wireless access layer of the first UE from a high layer of the first UE (for example, an application layer or other protocol layers or functional layers above RRC).

In the above step 22, the first UE receives and/or sends data according to the m sets of DRX configuration information and the association relationship between the at least b sets of DRX configuration information in the m sets of DRX configuration information.

Specifically, the association relationship between the at least b sets of DRX configuration information includes at least one of the following:
1) after receiving or sending data and/or signaling of the t-th service during the active time indicated by the i-th set of DRX configuration information in the m-sets of DRX configuration information, starting, after specified time or immediately, an inactivity timer of the j-th set of DRX configuration information corresponding to the u-th service, and receiving and/or waiting to receive data and/or signaling of the u-th service;
2) after receiving or sending data and/or signaling of the t-th service during the active time indicated by the i-th set of DRX configuration information in the m-sets of DRX configuration information, entering, after specified time or immediately, an activity time of the j-th set of DRX configuration information corresponding to the u-th service, and receiving and/or waiting to receive data and/or signaling of the u-th service;
3) after receiving or sending data and/or signaling of the t-th service during the active time indicated by the i-th set of DRX configuration information in the m-sets of DRX configuration information, starting, after specified time or immediately, an on-duration timer of the j-th set of DRX configuration information corresponding to the u-th service, and receiving and/or waiting to receive data and/or signaling of the u-th service;
4) after receiving or sending data and/or signaling of the t-th service during the active time indicated by the i-th set of DRX configuration information in the m-sets of DRX configuration information, according to data arrival characteristics and/or service performance requirements of the associated u-th service, performing at least one of starting an inactive timer of the j-th set of DRX configuration information corresponding to the u-th service, starting an on-duration timer of the j-th set of DRX configuration information and entering an active time of the j-th set of DRX configuration information, and receiving and/or waiting to receive data and/or signaling of the u-th service.

For example, the UE sends an uplink service (assumed to be the service t) during the active time indicated by the i-th set of DRX configuration information, and the uplink service is responsible for to transmit data from the UE to the network side; then, the UE enters the active time indicated by the j-th set of DRX configuration information corresponding to the service u (or starts an inactive timer and/or on-duration timer, etc.), according to a clear time relationship (for example, a start position of the active time of the service in the uplink direction is T1 earlier than a start position of the active time of the service in the downlink direction) between another downlink service (assumed to be a service u, which is responsible for information such as receiving information fed back by an application layer of the network side and/or issuing some control commands) corresponding to the uplink service, and receives and/or waits to receive data of the service u.

Here, the specified time described herein may be a pre-agreed time, a time configured by the network side, or a time determined by a high-layer of the UE. The immediate starting means starting the corresponding timer when receiving or sending data and/or signaling of the t-th service. The inactive timer refers to drx-InactivityTimer. The active time refers to an on-duration time period or active time period in the DRX cycle. The on-dureation timer refers to onDurationTimer, which is used to indicate, counting from the start sub-frame from the DRX cycle, the number of consecutive sub-frames that need to monitor the PDCCH (that is, the number of sub-frames that last for the active time).

In addition, it is to be noted that expressions such as the i-th set, j-th set, t-th service and u-th service herein are all used to distinguish similar objects, and not necessarily used to describe a specific order or sequence.

Optionally, the association relationship between the at least b sets of DRX configuration information may include at least one of the following:
1) After receiving or sending the v-th type data and/or signaling of the q-th service during an active time indicated by the h-th set of DRX configuration information in the m sets of DRX configuration information, starting, after a specified time or immediately, an inactive timer of the z-th set of DRX configuration information corresponding to the u-th type data and/or signaling of the q-th service, and receiving and/or waiting to receive the u-th type data and/or signaling of the q-th service;
2) After receiving or sending the v-th type data and/or signaling of the q-th service during an active time indicated by the h-th set of DRX configuration information in the m sets of DRX configuration information, entering, after a specified time or immediately, an active time of the z-th set of DRX configuration information corresponding to the u-th type of the q-th service, and receiving and/or waiting to receive the u-th type data and/or signaling of the q-th service;
3) After receiving or sending the v-th type data and/or signaling of the q-th service during an active time indicated by the h-th set of DRX configuration information in the m sets of DRX configuration information, starting, after a specified time or immediately, an on-duration timer of the z-th set of DRX configuration information corresponding to the u-th type in the first service, and receiving and/or waiting to receive the u-th type data and/or signaling of the q-th service;
4) After receiving or sending the v-th type data and/or signaling of the q-th service during an active time indicated by the h-th set of DRX configuration information in the m sets of DRX configuration information, according to service performance requirements such as arrival characteristics and/or delay of the u-th type data of the associated q-th service, performing at least one of starting an inactive timer of the z-th set of DRX configuration information corresponding to the u-th type in the q-th service, starting on-duration timer of the z-th set of DRX configuration information and entering an active time of the z-th set of DRX configuration information, and receiving and/or waiting to receive the u-th type data and/or signaling in the q-th service.

For example, the q-th service is an XR-oriented service, and the UE only monitors data (the v-th type data and/or signaling) of the P frame of XR during the active time indicated by the h-th set of DRX configuration information. According to the time relationship between the P frame data and the I frame data, the frequency domain resource position or beam position and other relationships, the UE determines to enter, after a specified time or immediately, an activity time (or starting the inactive timer and/or on-duration timer) indicated by the z-th set of DRX configuration information corresponding to the u-th type (I frame of XR service) of the XR-oriented service, and receives and/or waits to receive the I frame data of the XR service. After receiving the I frame data, the UE enters (or starts the inactive timer and/or on-duration timer), after a specified time or immediately, the active time indicated by the b-th set of DRX configuration information corresponding to the RTCP feedback of the XR-oriented service, and receives and/or waits to receive RTCP feedback data of the XR service.

For example, when the m sets of DRX configuration information correspond to different communication types, the m sets of DRX configuration information include: a first set of DRX configuration information corresponding to a multicast mode, and a second set of DRX configuration information corresponding to a unicast mode. The association relationship between the at least b sets of DRX configuration information includes: the first set of DRX configuration information is associated with the second set of DRX configuration information. For example, the first UE receives, based on the first set of DRX configuration information, new transmission data of a target service sent by the network side in multicast mode; when receiving retransmission data of the target service sent by the network side in unicast mode, the UE may receive data based on the second set of DRX configuration information associated with the first set of DRX configuration information.

In this way, in the above step 22, the first UE may receive new transmission data of the multicast service sent by the network device according to the first set of DRX configuration information; and, before receiving the new transmission data or during reception of the new transmission data, the first UE may determine a reception mode of retransmission data, where the reception mode of the retransmission data includes: a multicast reception mode and/or a unicast reception mode.

In case that the first UE fails to receive the new transmission data, according to the reception mode of the retransmission data, the first UE monitors PDCCH scheduling signaling corresponding to the retransmission data and receives the retransmission data. When using the multicast reception mode, based on the first set of DRX configuration information, the first UE receives retransmission data scrambled by group-radio network temporary identify (G-RNTI) and/or Group Configured Scheduling RNTI (G-CS-RNTI). When using the unicast reception mode, based on the second set of DRX configuration information, the first UE receives retransmission data scrambled by C-RNTI and/or CS-RNTI.

In the embodiment of the present disclosure, when the first UE determines the reception mode of the retransmission data, the first UE may determine the reception mode of the retransmission data according to indication information for indicating retransmission mode of the new transmission data. When the retransmission mode is a point-to-multipoint (PTM) mode, the reception mode is a multicast reception mode; when the retransmission mode is a point-to-point (PTP) mode, the reception mode is a unicast reception mode; when the retransmission mode is the PTP mode and the PTM mode, the reception mode is the multicast reception mode and the unicast reception mode.

In addition, the first UE may extract the indication information of the retransmission mode of the new transmission data from the scheduling command for scheduling the new transmission data of the multicast service. When the network side does not indicate the retransmission mode, for example, when the scheduling command of the new transmission data does not include the indication information of the retransmission mode, the first UE may determine the reception mode of the retransmission data to be multicast reception mode and unicast reception mode.

When using the multicast reception mode, based on the first set of DRX configuration information, receiving retransmission data scrambled by the multicast radio network temporary identifier G-RNTI and/or G-CS-RNTI may specifically include: starting a multicast round trip time (HARQ RTT) timer; when the multicast HARQ RTT timer expires, starting to monitor retransmission data scrambled by G-RNTI and/or G-CS-RNTI, and starting a corresponding multicast retransmission timer.

HARQ is Hybrid Automatic Repeat request. RTT is Round Trip Time. When the unicast reception mode is adopted, based on the second set of DRX configuration information, receiving retransmission data scrambled by C-RNTI and/or CS-RNTI may specifically include: starting the unicast HARQ RTT timer; and when the unicast HARQ RTT timer expires, starting to monitor retransmission data scrambled by C-RNTI and/or CS-RNTI, and starting a corresponding unicast retransmission timer.

The above method in the embodiment of the present disclosure can also be applied in the carrier aggregation scenario. For example, the first UE communicates with the network device through carrier aggregation, at this point, when using the unicast reception mode, based on the second set of DRX configuration information, receiving retransmission data scrambled by C-RNTI and/or CS-RNTI may further include: determining a monitored target carrier and/or a target BWP according to indication information of a carrier and/or a bandwidth part (BWP) resource associated with the retransmission data; and monitoring retransmission data scrambled by C-RNTI and/or CS-RNTI on the target carrier and/or the target BWP.

In the embodiment of the present disclosure, the new transmission data and the retransmission data of the multicast service may be sent by different network devices. For example, the new transmission data of the multicast service is sent by the first network device, and the retransmission data is sent by the second network device. When the first UE monitors, based on the second set of DRX configuration information, the retransmission data scrambled by the C-RNTI and/or CS-RNTI, the first UE may receive, based on the second set of DRX configuration information, retransmission data scrambled by the C-RNTI and/or CS-RNTI and sent by the second network device.

Optionally, in this embodiment of the present disclosure, receiving and/or sending data, by the first UE, according to the m sets of DRX configuration information and the association relationship between the at least b sets of DRX configuration information in the m sets of DRX configuration information, includes at least one of the following:
1) according to the i-th set of DRX configuration information, after the first UE receives data and/or signaling of the t-th service sent by the network device, starting, after a specified time or immediately, an inactive timer of the j-th set of DRX corresponding to the u-th service, and receiving and/or waiting to receive the data of the u-th service;
2) according to the i-th set of DRX configuration information, the first UE receives data and/or signaling of the t-th service sent by the network device; and, before receiving the data and/or signaling of the t-th service sent by the network device or when receiving the data and/or signaling of the t-th service sent by the network device, obtaining a j-th set of DRX configuration information corresponding to the u-th service which is associated with the t-th service corresponding to the i-th set of DRX configuration information; and using the j-th set of DRX configuration information to start an inactive timer of the j-th set of DRX configuration information, and receiving and/or waiting to receive data of the u-th service.

In order to achieve more flexible DRX configuration, in the embodiment of the present disclosure, the network side can more flexibly and quickly update time information of a certain set (assumed to be the k-th set) of DRX configuration information in the m sets of DRX configuration information according to needs. At this point, the first UE receives a first signaling sent by the network side, where the first signaling is used to update time information of the k-th set of DRX configuration information in the m sets of DRX configuration information. The first signaling may include at least one of the following: RRC signaling; Media Access Control Control Element (MAC CE); PDCCH control signaling. Then, the first UE updates start position information and/or cycle information of an active time in the k-th set of DRX configuration information, according to the first signaling.

For example, for some services (such as extended reality (XR) services), when a cycle value in time information of a service corresponding to a logical channel does not match a cycle value of the related fifth-generation mobile communication technology (5th-Generation 5G) network, for example, the cycle value in the time information of the service corresponding to the logical channel and a cycle value in time information of a service corresponding to a logical channel in a valid period of the DRX radio resource are not integer divisor of a cycle period 10240 ms of radio frame, it will result in the following problem that after several DRX cycles (e.g., after the SFN number warps around), the transmission opportunity calculated based on the relevant technical resources, i.e., the offset value, is inconsistent with an actual time point when the service packet needs to be sent. In this case, the problem can be solved by updating the starting position of the DRX radio resource; or through such multi-level DRX configuration setting, the use of radio resources can be better adapted to such complex service characteristics.

Specifically, the time information updated by the first signaling is related to the time information of the target service corresponding to the target logical channel, and the target logical channel is a logical channel corresponding to the k-th set of DRX configuration information. The time information updated by the first signaling may include at least one of the following: clock information; and an offset value (delta value) relative to the last clock information. The time information of the target service may include at least one of the following:
1) time information of Coordinated Universal Time (UTC);
2) an offset of UTC and Global Positioning System (GPS) clock;
3) relationship information between daylight saving time and local time;
4) an offset between UTC and local time;
5) an offset between UTC and a specific network;
6) a mapping relationship between UTC and system frame number SFN;
7) indication information of whether it is a master clock;
8) Hierarchical information of the clock;
9) offset information relative to reference time of specific clock type;
10) synchronization accuracy information of clock;
11) synchronization granularity information of clock;
12) Synchronization inaccuracy information;
13) type information of clock;
14) reference time information;
15) reference time information and location relationship indication information of received signaling;
16) time update cycle information of clock.

The reference time information further includes at least one of the following: reference system radio frame information; reference sub-frame information; reference slot information; reference time symbol information.

In order to realize more flexible DRX configuration, in the embodiment of the present disclosure, the first UE may also actively update time information of a certain set (assumed to be the n-th set) of DRX configuration information in the m sets of DRX configuration information. For example, when a time deviation between a start position of the active time of the n-th set of DRX configuration information in the m sets of DRX configuration information and an actual data transmission time of the service reaches a predetermined first threshold, the first UE adjusts the DRX cycle and/or starting position in the n-th set of DRX configuration information.

Before the first UE actively updates the time information of a certain set (assumed to be the n-th set) of DRX configuration information in the m sets of DRX configuration information, the first UE needs to obtain time information of a service corresponding to the s-th set of DRX configuration information; and then, according to the time information of the service corresponding to the s-th set of DRX configuration information, the first UE determines updating of the time information of a certain set (assumed to be the n-th set) of the DRX configuration information in the m sets of DRX configuration information. Specifically, the time information of the service may include at least one of the following information:
1) sending time information of a data packet;
2) arrival time information of a data packet; sending cycle information of the data packet;
3) sending duration information of one cycle of the data packet;
4) length information of the data packet;
5) duration information of the data packet residing in a cache;
6) data packet survival time information;
7) sending status information of first y data packets of data packets, y is a positive integer;
8) delay requirements for data packets;
9) value of k in HARQ timing of the data packet;
10) reliability requirements for data packets;
11) radio network temporary identifier RNTI matching the data packet scheduling;
12) transmission power requirement of the data packet.

In the embodiment of the present disclosure, a valid period and an invalid period are introduced in the DRX configuration information. In the valid period, related operations of discontinuous reception can be performed normally; and in the invalid period, the related operations of discontinuous reception are stopped. For example, the first UE may obtain time information of a valid period and time information of an invalid period of a certain set (assumed to be the s-th set) of DRX configuration information in the m sets of DRX configuration information. Within a time period indicated by the time information of the valid period of the s-th set of DRX configuration information, transmission or reception of data and/or signaling is performed during the active time of the valid period. Within a time period indicated by the time information of the invalid period of the valid period of the s-th set of DRX configuration information, at least one of transmission or reception of data and/or signaling is stopped. That is, the first UE performs normal discontinuous reception processing during the time period of the valid period indicated by the time information of the valid period, and stop processing of the discontinuous reception during the time period of the invalid period indicated by the time information of the invalid period.

As an implementation, the first UE may receive the time information of the valid period and the time information of the invalid period of the k-th set of DRX configuration information configured by the network device through RRC dedicated signaling, thereby obtaining the time information of the valid period and the time information of the invalid period of the s-th set of DRX configuration information.

As another way of obtaining the time information of the above valid period and the time information of the invalid period, the first UE may also obtain the time information of the service corresponding to the s-th set of DRX configuration information, and then, according to the time information of the service corresponding to the s-th set of DRX configuration information, the first UE determines the time information of the valid period and the time information of the invalid period of the s-th set of DRX configuration information. Specifically, the time information of the service may include at least one of the following information:
1) sending time information of a data packet;
2) arrival time information of a data packet; sending cycle information of the data packet;
3) sending duration information of one cycle of the data packet;
4) length information of the data packet;
5) duration information of the data packet residing in a cache;
6) data packet survival time information;
7) sending status information of first n data packets of data packets, n is a positive integer;
8) delay requirements for data packets;
9) value of k in HARQ timing of the data packet;
10) reliability requirements for data packets;
11) radio network temporary identifier RNTI matching the data packet scheduling;
12) transmission power requirement of the data packet.

The above-mentioned time information of the service can be sent to the UE by the core network or the radio access network through signaling, or can be defined in the protocol, or can also be provided by a high layer of the UE (for example, an application layer or other protocol layer or functional layer above RRC) to a radio access layer of the UE; or can be informed to the UE by the artificial intelligence control function entity.

In the embodiment of the present disclosure, when the first UE needs to receive multiple multicast services sent by the network device, multiple small DRX cycles may be included in one large DRX cycle to form a multi-level DRX configuration information.

For example, a first DRX cycle in the p-th set of DRX configuration information in the m sets of DRX configuration information includes x second DRX cycles; and configurations corresponding to the x second DRX cycles are different or partially the same or have a corresponding relationship, which may specifically include at least one of the following manners:
1) values of the x second DRX cycles are the same or different;
2) start positions of active time corresponding to the x second DRX cycles are explicitly indicated or have a corresponding relationship; for example, there is a time relationship between transmission and/or reception of data of different streams;
3) corresponding values of at least one of inactive timer, retransmission timer and active timer in the x second DRX cycles are set to be the same or different.

The introduction of the above multi-level DRX configuration information has the following beneficial effects:
a) certain service (such as XR service or vehicle to everything (V2X) services) include different service flows and/or flows, transmission cycles between different service flows and/or flows, and delay/jitter performance requirements, and packet sizes are all different; but these flows constitute an XR service or V2X service. This multi-level DRX configuration setting can better adapt the use of radio resources to such complex business characteristics;
b) for certain services (such as XR services), when the cycle value in the time information of the service corresponding to the logical channel does not match the cycle value of the related technology 5G network, for example, the cycle value in the time information of the service corresponding to the logical channel and a cycle value in time information of a service corresponding to a logical channel in a valid period of the DRX radio resource are not integer divisor of a cycle period 10240 ms of radio frame, it will result in the following problem that after several DRX cycles (e.g., after the SFN number warps around), the transmission opportunity calculated based on the relevant technical resources, i.e., the offset value, is inconsistent with an actual time point when the service packet needs to be sent. In this case, the problem can be solved by updating the starting position of the DRX radio resource; or through such multi-level DRX configuration setting, the use of active/inactive period of radio resources can be better adapted to such complex service characteristics.

Specifically, the DRX cycles of the x multicast services form a multicast DRX cycle, the first DRX cycle is the multicast DRX cycle, and the DRX cycle of each multicast service in the x multicast services corresponds to one of the x second DRX cycles.

The p-th set of DRX configuration information includes at least one of: the multicast DRX cycle, a position of the DRX cycle of each multicast service in the multicast DRX cycle, DRX configuration information of each multicast service, G-RNTI corresponding to each multicast service, whether to enable HARQ feedback for the PTM transmission mode corresponding to each multicast service, and whether to enable HARQ retransmission in the PTM transmission mode corresponding to each multicast service. At this point, in the above step 22, the first UE may receive data of each multicast service according to the p-th set of DRX configuration information.

The above method will be further described hereinafter with an example in which the base station configures for the UE, DRX configuration information respectively corresponding to the unicast service and the MBS service.

In this example, the base station configures different DRX configurations and corresponding timers for the UE's unicast service and Multicast Broadcast Service (MBS), and sends to the UE, two sets of DRX configuration information which are corresponding to the unicast business and MBS business, respectively.

The UE receives the above two sets of DRX configuration information sent by the base station. In normal circumstances, the UE receives data and starts the corresponding timer in an active state of the DRX configuration configured for the unicast service and the MBS service respectively. That is, during the active time (on duration) of the unicast, the UE only starts monitoring PDCCH scrambled by C-RNTI; during multicast-on duration, the UE only starts monitoring PDCCH scrambled by the G-RNTI.

As shown in FIG. 3, it is assumed that in the multicast-on duration, the UE only starts monitoring PDCCH scrambled by G-RNTI 1; at this point, the UE receives a scheduling command for new transmission data of an MBS service, and the scheduling command carries indication information which is used to indicate a retransmission mode such as PTM retransmission and/or PTP retransmission that the base station will use if the new transmission data of the MBS service fails to be received. If the scheduling command does not carry the indication information of the retransmission mode, the UE considers that the above two retransmission modes are possible.

If the new transmission multicast data of the MBS service is successfully received, the unicast-DRX remains in an original state, that is, the UE only starts monitoring PDCCH scrambled by the C-RNTI; but if the new transmission multicast data fails to be received, then unicast-DRX still maintains the original state, and the UE will start the HARQ RTT-multicast timer and/or the HARQ RTT-unicast timer according to instructions of the base station; after any timer expires, the UE will start monitoring retransmission data according to the timer that has expired. For example, when the HARQ RTT-multicast timer expires, the UE monitors the retransmission data scrambled by G-RNTI, and/or, if the HARQ RTT-unicast timer expires, then the UE monitors retransmission data scrambled by C-RNTI; at the same time, the UE starts the corresponding retransmission timer according to the timer that has expired, such as multicast retransmission timer and/or unicast retransmission timer.

In addition, in case of a carrier aggregation scenario, the base station can further instruct the UE to monitor unicast DRX timing and carrier/BWP resources on which carrier associated with the multicast data packet.

In this way, this example not only supports configuring DRX configurations for unicast and multicast respectively to achieve power saving effect, but also avoids the problem that due to the independent DRX design, it cannot support transmission of new transmission data through PTM and retransmission of data through PTP.

In this example, if the UE needs to receive multiple MBS services with different time formats, then the cycle and time of a starting position can be designed and G-RNTI can be added for differentiation. For example, the cycle is 10ms, and in the first 10ms, it is enabled to monitor PDCCH with G-RNTI1/G-RNTI2; in the second 20ms, it is enabled to monitor PDCCH with G-RNTI3; in the third 20ms, it is enabled to monitor PDCCH with G-RNTI4; thereby forming a large cycle of 50ms in total. Further, the base station indicates, to the UE through DCI command, the following information: whether to enable HARQ feedback or HARQ retransmission for PTM corresponding to different G-RNTIs. If an indication is to prohibit HARQ feedback or HARQ retransmission, UE can automatically prohibit the start of DRX-HARQ-RTT-TIMER-DL and DL retransmission timer, (or automatically set values of these two timers to 0), even if G-RNTI packet is received error.

In addition, if the UE receives the MBS on a base station 1 and receives unicast service on a base station 2, then the two base stations need to exchange the UE's DRX configuration information.

In this example, when the time-frequency cycle of the MBS service and the DRX cycle available in 5G are not integral, for example, the industrial control command of a factory, after a period of time, the MBS DRX cycle may deviate from an actual data transmission time of a service. According to the MBS service format information, the UE can automatically adjust the MBS-DRX transmission cycle/starting position when the DRX valid transmission time and the actual data transmission time of the service deviate to a certain threshold. In addition, in order to save power, when the base station needs to use PTP to perform PTM data retransmission, the UE is also required to automatically adjust transmission cycle/start position of unicast-DRX.

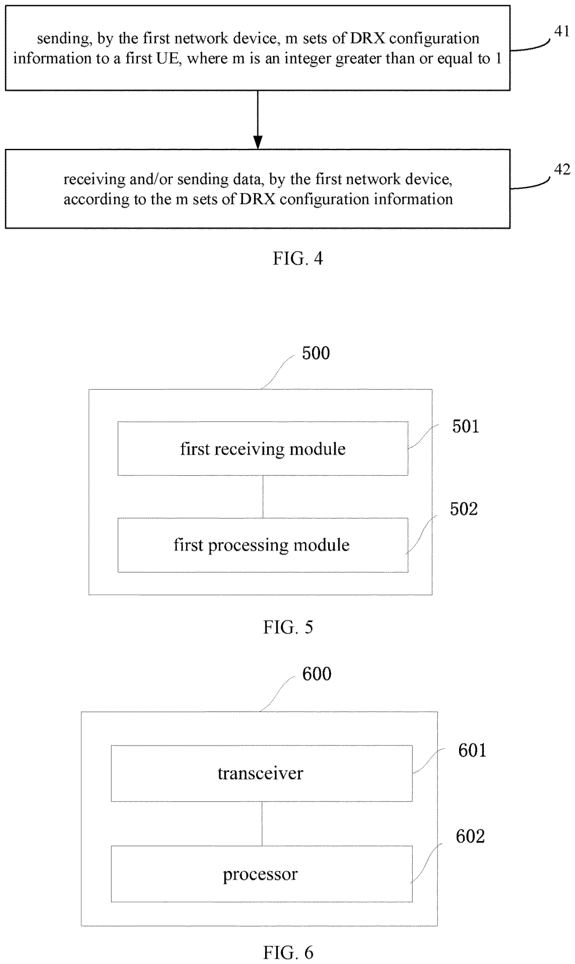

Referring to FIG. 4, one embodiment of the present disclosure provides a discontinuous reception scheduling method applied to a first network device, which includes:
Step 41: sending, by the first network device, m sets of DRX configuration information to a first UE; where m is an integer greater than or equal to 1, and correspondence relationship of the m sets of DRX configuration information includes at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to a service or different communication directions of different services.

Step 42: receiving and/or sending data, by the first network device, according to the m sets of DRX configuration information.

Through the above steps, the embodiment of the present disclosure introduces the DRX configuration information corresponding to factors such as service communication type, service type, scheduling mode, frame type or data type, and service communication direction. Based on the above factors, the network device configures corresponding DRX configuration information for the UE, thereby realizing more accurate discontinuous reception and providing support for better power saving effect.

In the above step 42, the first network device may receive and/or send data according to the m sets of DRX configuration information and association relationship between at least b sets of DRX configuration information in the m sets of DRX configuration information, where b is an integer greater than 1 and less than or equal to m. Here, the association relationship between at least b sets of DRX configuration information is configured by the network side, or is predefined, or is sent by the first UE to the first network device.

Specifically, the association relationship between the at least b sets of DRX configuration information includes at least one of the following:
1) after receiving or sending data and/or signaling of the t-th service during the active time indicated by the i-th set of DRX configuration information in the m-sets of DRX configuration information, starting, after specified time or immediately, an inactivity timer of the j-th set of DRX configuration information corresponding to the u-th service, and receiving and/or waiting to receive data and/or signaling of the u-th service;
2) after receiving or sending data and/or signaling of the t-th service during the active time indicated by the i-th set of DRX configuration information in the m-sets of DRX configuration information, entering, after specified time or immediately, an activity time of the j-th set of DRX configuration information corresponding to the u-th service, and receiving and/or waiting to receive data and/or signaling of the u-th service;
3) after receiving or sending data and/or signaling of the t-th service during the active time indicated by the i-th set of DRX configuration information in the m-sets of DRX configuration information, starting, after specified time or immediately, an on-duration timer of the j-th set of DRX configuration information corresponding to the u-th service, and receiving and/or waiting to receive data and/or signaling of the u-th service;
4) after receiving or sending data and/or signaling of the t-th service during the active time indicated by the i-th set of DRX configuration information in the m-sets of DRX configuration information, according to data arrival characteristics and/or service performance requirements of the associated u-th service, performing at least one of starting an inactive timer of the j-th set of DRX configuration information corresponding to the u-th service, starting an on-duration timer of the j-th set of DRX configuration information and entering an active time of the j-th set of DRX configuration information, and receiving and/or waiting to receive data and/or signaling of the u-th service;
5) After receiving or sending the v-th type data and/or signaling of the q-th service during an active time indicated by the h-th set of DRX configuration information in the m sets of DRX configuration information, starting, after a specified time or immediately, an inactive timer of the z-th set of DRX configuration information corresponding to the u-th type data and/or signaling of the q-th service, and receiving and/or waiting to receive the u-th type data and/or signaling of the q-th service;
6) After receiving or sending the v-th type data and/or signaling of the q-th service during an active time indicated by the h-th set of DRX configuration information in the m sets of DRX configuration information, entering, after a specified time or immediately, an active time of the z-th set of DRX configuration information corresponding to the u-th type of the q-th service, and receiving and/or waiting to receive the u-th type data and/or signaling of the q-th service;
7) After receiving or sending the v-th type data and/or signaling of the q-th service during an active time indicated by the h-th set of DRX configuration information in the m sets of DRX configuration information, starting, after a specified time or immediately, an on-duration timer of the z-th set of DRX configuration information corresponding to the u-th type in the first service, and receiving and/or waiting to receive the u-th type data and/or signaling of the q-th service;
8) After receiving or sending the v-th type data and/or signaling of the q-th service during an active time indicated by the h-th set of DRX configuration information in the m sets of DRX configuration information, according to service performance requirements such as arrival characteristics and/or delay of the u-th type data of the associated q-th service, performing at least one of starting an inactive timer of the z-th set of DRX configuration information corresponding to the u-th type in the q-th service, starting on-duration timer of the z-th set of DRX configuration information and entering an active time of the z-th set of DRX configuration information, and receiving and/or waiting to receive the u-th type data and/or signaling in the q-th service.

For example, when the m sets of DRX configuration information correspond to different communication types, the m sets of DRX configuration information may include: the first set of DRX configuration information corresponding to the multicast mode, and the second set of DRX configuration information corresponding to the unicast mode. The association relationship between the at least b sets of DRX configuration information includes: the first set of DRX configuration information is associated with the second set of DRX configuration information.

At this point, in the above step 42, the first network device may send new transmission data of the multicast service according to the first set of DRX configuration information; and, before sending the new transmission data or when sending the new transmission data, the first network device may determine the retransmission mode of retransmission data; the retransmission mode includes a PTM mode and/or a PTP mode; and
when the first UE fails to receive the new transmission data, the first network device sends the retransmission data corresponding to the new transmission data to the first UE according to the retransmission mode of the retransmission data. When using the PTM mode, based on the first set of DRX configuration information, the first network device sends retransmission data scrambled by the multicast radio network temporary identifier G-RNTI and/or G-CS-RNTI; when using the PTP mode, based on the second set of DRX configuration information, the first network device sends retransmission data scrambled by the C-RNTI and/or CS-RNTI.

Optionally, the first network device may also carry indication information of the retransmission mode of the new transmission data in the scheduling command for scheduling the new transmission data of the multicast service, thereby helping the UE to determine reception mode of the retransmission data.

In addition, the first UE may also communicate with the first network device in a carrier aggregation manner. At this point, when the base station adopts the PTP mode and sends the retransmission data scrambled by the C-RNTI and/or CS-RNTI based on the second set of DRX configuration information, the first network device may further send to the first UE, indication information of a carrier and/or a bandwidth part (BWP) resource associated with the retransmission data, so that the first UE determines a monitored target carrier and/or a target BWP.

Optionally, in the above step 42, receiving and/or sending data, by the first network device, according to the m sets of DRX configuration information and association relationship between at least b sets of DRX configuration information in the m sets of DRX configuration information, can further include at least one of the following:
1) after the first network device sends data and/or signaling of the t-th service according to the i-th set of DRX configuration information, starting, after a specified time or immediately, an inactivity timer of the j-th set of DRX corresponding to the u-th service, and sending and/or waiting to send data of the u-th service;
   after the first network device sends data and/or signaling of the t-th service according to the i-th set of DRX configuration information; and before sending the data and/or signaling of the t-th service or when sending the data and/or signaling of the t-th service, obtaining the j-th set of DRX configuration information corresponding to the u-th service associated with the t-th service corresponding to the i-th set of DRX configuration information; and using the j-th set of DRX configuration information to start an inactive timer of the j-th set of DRX configuration information, and sending and/or waiting to send data of the u-th service.

In addition, in the embodiment of the present disclosure, when the first network device sends the retransmission data, the first network device may send the retransmission data directly to the UE, or send the retransmission data scrambled by the C-RNTI and/or CS-RNTI through the second network device.

In order to achieve more flexible DRX configuration, in the embodiment of the present disclosure, the first network device may also send a first signaling to the first UE, and the first signaling is used to update time information of the k-th set of DRX configuration information in the m sets of DRX configuration information. The first signaling may include at least one of the following: RRC signaling; Media Access Control Control Element (MAC CE); PDCCH control signaling.

Here, the time information updated by the first signaling is related to the time information of the target service corresponding to the target logical channel, and the target logical channel is a logical channel corresponding to the k-th set of DRX configuration information.

Specifically, as an implementation manner, when a time deviation between a start position of the active time of the k-th set of DRX configuration information and an actual data transmission time of the service reaches a predetermined first threshold, the first network device adjusts the DRX cycle and/or start position in the k-th set of DRX configuration information, and sends the first signaling.

Optionally, this embodiment of the present disclosure also introduces a valid period and an invalid period. At this point, the first network device may obtain time information of a valid period and time information of an invalid period of the s-th set of DRX configuration information in the m sets of DRX configuration information. For example, the first network device obtains time information of a service corresponding to the s-th set of DRX configuration information, and then determines time information of a valid period and time information of an invalid period of the s-th set of DRX configuration information according to the time information of the service corresponding to the s-th set of DRX configuration information.

In this way, the first network device can send or receive data and/or signaling during an active time of the valid period within a time period indicated by the time information of the valid period of the s-th set of DRX configuration information. Within a time period indicated by the time information of the invalid period of the s-th set of DRX configuration information, the first network device stops sending or receiving at least one of data and/or signaling.

Specifically, the first network device may configure the time information of the valid period and the time information of the invalid period of the k-th set of DRX configuration information for the first UE through RRC dedicated signaling.

When the first network device sends multiple multicast services, a large DRX cycle includes multiple small DRX cycles to form multi-level DRX configuration information. For example, a first DRX cycle in the p-th set of DRX configuration information in the m sets of DRX configuration information includes x second DRX cycles; and configurations corresponding to the x second DRX cycles are different or partially the same or have a corresponding relationship, which may specifically include at least one of the following manners:
1) values of the x second DRX cycles are the same or different;
2) start positions of active time corresponding to the x second DRX cycles are explicitly indicated or have a corresponding relationship;
3) corresponding values of at least one of inactive timer, retransmission timer and active timer in the x second DRX cycles are set to be the same or different.

Here, x is usually an integer greater than 1.

At this point, the DRX cycles of x multicast services form a multicast DRX cycle, the first DRX cycle is the multicast DRX cycle, and the DRX cycle of each multicast service in the x multicast services is corresponding to one of the x second DRX cycles.

When a multi-level DRX cycle is introduced, the p-th set of DRX configuration information may specifically include at least one of: the multicast DRX cycle, a position of the DRX cycle of each multicast service in the multicast DRX cycle, DRX configuration information of each multicast service, G-RNTI corresponding to each multicast service, whether to enable HARQ feedback for PTM transmission mode corresponding to each multicast service, whether to enable HARQ retransmission for PTM for PTM transmission mode corresponding to each multicast service. At this point, the first network device may send data of each multicast service according to the p-th set of DRX configuration information.

Various methods of the embodiments of the present disclosure have been introduced above. A device for implementing the above method will be further provided below.

Referring to FIG. 5, one embodiment of the present disclosure further provides a UE 500, including:
a first receiving module 501 configured to receive m sets of DRX configuration information configured by a network side, where m is an integer greater than or equal to 1, wherein correspondence relationship of the m sets of DRX configuration information includes at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to a service or different communication directions of different services;
a first processing module 502 configured to receive and/or send data according to the m sets of DRX configuration information.

Optionally, the first processing module is further configured to receive data and/or send data according to the m sets of DRX configuration information and the association relationship between at least b sets of DRX configuration information in the m sets of DRX configuration information, where b is an integer greater than 1 and less than or equal to m.

The association relationship between the at least b sets of DRX configuration information may be sent to the first UE by the network side through signaling, or may be predefined, or may be sent to a radio access layer of the first UE from a high layer of the first UE.

Optionally, when the m sets of DRX configuration information correspond to different communication types, the m sets of DRX configuration information include: a first set of DRX configuration information corresponding to a multicast mode, and a second set of DRX configuration information corresponding to a unicast mode. The association relationship between the at least b sets of DRX configuration information includes: the first set of DRX configuration information is associated with the second set of DRX configuration information.

Optionally, the first processing module includes:
a second receiving module configured to receive new transmission data of the multicast service sent by the network device according to the first set of DRX configuration information;
a first determining module configured to determine a reception mode of retransmission data, before receiving the new transmission data or during reception of the new transmission data, where the reception mode of the retransmission data includes: a multicast reception mode and/or a unicast reception mode;
a third receiving module configured to, in case of failing to receive the new transmission data, according to the reception mode of the retransmission data, monitor PDCCH scheduling signaling corresponding to the retransmission data and receive the retransmission data; when using the multicast reception mode, based on the first set of DRX configuration information, receive retransmission data scrambled by group-radio network temporary identify (G-RNTI) and/or Group Configured Scheduling RNTI (G-CS-RNTI); when using the unicast reception mode, based on the second set of DRX configuration information, receive retransmission data scrambled by C-RNTI and/or CS-RNTI.

Optionally, the first determination module is further configured to determine the reception mode of the retransmission data according to indication information for indicating retransmission mode of the new transmission data. When the retransmission mode is a point-to-multipoint (PTM) mode, the reception mode is a multicast reception mode; when the retransmission mode is a point-to-point (PTP) mode, the reception mode is a unicast reception mode; when the retransmission mode is the PTP mode and the PTM mode, the reception mode is the multicast reception mode and the unicast reception mode.

Optionally, the first determining module is further configured to extract the indication information of the retransmission mode of the new transmission data from the scheduling command for scheduling the new transmission data of the multicast service.

Optionally, the first determining module is further configured to, when the scheduling command of the new transmission data does not include the indication information of the retransmission mode, determine the reception mode of the retransmission data to be multicast reception mode and unicast reception mode.

Optionally, the third receiving module is further configured to,
when using the multicast reception mode and receiving retransmission data scrambled by the multicast radio network temporary identifier G-RNTI and/or G-CS-RNTI based on the first set of DRX configuration information, start a multicast round trip time (HARQ RTT) timer; when the multicast HARQ RTT timer expires, start to monitor retransmission data scrambled by G-RNTI and/or G-CS-RNTI, and start a corresponding multicast retransmission timer;
when using the unicast reception mode and receiving retransmission data scrambled by C-RNTI and/or CS-RNTI based on the second set of DRX configuration information, start the unicast HARQ RTT timer; and when the unicast HARQ RTT timer expires, start to monitor retransmission data scrambled by C-RNTI and/or CS-RNTI, and start a corresponding unicast retransmission timer.

Optionally, the first UE communicates with the network device through carrier aggregation. The third receiving module is further configured to, when using the unicast reception mode and receiving retransmission data scrambled by C-RNTI and/or CS-RNTI based on the second set of DRX configuration information, determine a monitored target carrier and/or a target BWP according to indication information of a carrier and/or a bandwidth part (BWP) resource associated with the retransmission data; and monitor retransmission data scrambled by C-RNTI and/or CS-RNTI on the target carrier and/or the target BWP.

Optionally, the third receiving module is further configured to receive retransmission data scrambled by the C-RNTI and/or CS-RNTI sent by the second network device based on the second set of DRX configuration information.

Optionally, the first processing module is further configured to receive and/or send data in at least one of the following ways:
according to the i-th set of DRX configuration information, after receiving data and/or signaling of the t-th service sent by the network device, starting, after a specified time or immediately, an inactive timer of the j-th set of DRX corresponding to the u-th service, and receiving and/or waiting to receive the data of the u-th service;
according to the i-th set of DRX configuration information, receiving data and/or signaling of the t-th service sent by the network device; and, before receiving the data and/or signaling of the t-th service sent by the network device or when receiving the data and/or signaling of the t-th service sent by the network device, obtaining a j-th set of DRX configuration information corresponding to the u-th service which is associated with the t-th service corresponding to the i-th set of DRX configuration information; and using the j-th set of DRX configuration information to start an inactive timer of the j-th set of DRX configuration information, and receiving and/or waiting to receive data of the u-th service.

Optionally, the UE further includes:
a fourth receiving module configured to receive a first signaling sent by the network side, where the first signaling is used to update time information of the k-th set of DRX configuration information in the m sets of DRX configuration information;
a first updating module configured to update start position information and/or cycle information of an active time in the k-th set of DRX configuration information, according to the first signaling.

Optionally, the UE further includes:
a first adjustment module configured to, when a time deviation between a start position of the active time of the n-th set of DRX configuration information in the m sets of DRX configuration information and an actual data transmission time of the service reaches a predetermined first threshold, adjust the DRX cycle and/or starting position in the n-th set of DRX configuration information.

Optionally, the UE further includes:
a first obtaining module configured to obtain time information of a valid period and time information of an invalid period of a s-th set of DRX configuration information in the m sets of DRX configuration information;
where the first processing module is further configured to, within a time period indicated by the time information of the valid period of the s-th set of DRX configuration information, perform transmission or reception of data and/or signaling during the active time of the valid period; within a time period indicated by the time information of the invalid period of the valid period of the s-th set of DRX configuration information, stop at least one of transmission or reception of data and/or signaling.

Optionally, the first obtaining module is further configured to obtain time information of a service corresponding to the s-th set of DRX configuration information; determine time information of a valid period and time information of an invalid period of the s-th set of DRX configuration information according to the time information of the service corresponding to the s-th set of DRX configuration information.

Optionally, a first DRX cycle in the p-th set of DRX configuration information in the m sets of DRX configuration information includes x second DRX cycles; and configurations corresponding to the x second DRX cycles are different or partially the same or have a corresponding relationship, which may specifically include at least one of the following manners:
values of the x second DRX cycles are the same or different;
start positions of active time corresponding to the x second DRX cycles are explicitly indicated or have a corresponding relationship;
corresponding values of at least one of inactive timer, retransmission timer and active timer in the x second DRX cycles are set to be the same or different.

Optionally, the DRX cycles of x multicast services form a multicast DRX cycle, the first DRX cycle is the multicast DRX cycle, and the DRX cycle of each multicast service in the x multicast services is corresponding to one of the x second DRX cycles.

The p-th set of DRX configuration information includes at least one of: the multicast DRX cycle, a position of the DRX cycle of each multicast service in the multicast DRX cycle, DRX configuration information of each multicast service, G-RNTI corresponding to each multicast service, whether to enable HARQ feedback for PTM transmission mode corresponding to each multicast service, whether to enable HARQ retransmission for PTM for PTM transmission mode corresponding to each multicast service.

The first processing module is further configured to receive data of each multicast service according to the p-th set of DRX configuration information.

It is to be noted that the device in this embodiment is a device corresponding to the above method shown in FIG. 2, and the implementation manners in the above embodiments are all applicable to the embodiments of the device, and can also achieve the same technical effects. The above device provided in the embodiment of the present disclosure can implement all the method steps implemented in the above method embodiment, and can achieve the same technical effects. Parts and beneficial effects that are the same as those in the method embodiment in this embodiment will not be specifically described here.

Referring to FIG. 6, one embodiment of the present disclosure further provides a UE 600, including: a transceiver 601 and a processor 602.

The transceiver 601 is configured to receive m sets of DRX configuration information configured by a network side, where m is an integer greater than or equal to 1, wherein correspondence relationship of the m sets of DRX configuration information includes at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to a service or different communication directions of different services.

The processor 602 is configured to receive and/or send data according to the m sets of DRX configuration information.

Optionally, the processor is further configured to receive data and/or send data according to the m sets of DRX configuration information and the association relationship between at least b sets of DRX configuration information in the m sets of DRX configuration information, where b is an integer greater than 1 and less than or equal to m.

The association relationship between the at least b sets of DRX configuration information may be sent to the first UE by the network side through signaling, or may be predefined, or may be sent to a radio access layer of the first UE from a high layer of the first UE.

Optionally, when the m sets of DRX configuration information correspond to different communication types, the m sets of DRX configuration information include: a first set of DRX configuration information corresponding to a multicast mode, and a second set of DRX configuration information corresponding to a unicast mode. The association relationship between the at least b sets of DRX configuration information includes: the first set of DRX configuration information is associated with the second set of DRX configuration information.

Optionally, the processor is further configured to,
receive new transmission data of the multicast service sent by the network device according to the first set of DRX configuration information; determine a reception mode of retransmission data, before receiving the new transmission data or during reception of the new transmission data, where the reception mode of the retransmission data includes: a multicast reception mode and/or a unicast reception mode; in case of failing to receive the new transmission data, according to the reception mode of the retransmission data, monitor PDCCH scheduling signaling corresponding to the retransmission data and receive the retransmission data; when using the multicast reception mode, based on the first set of DRX configuration information, receive retransmission data scrambled by group-radio network temporary identify (G-RNTI) and/or Group Configured Scheduling RNTI (G-CS-RNTI); when using the unicast reception mode, based on the second set of DRX configuration information, receive retransmission data scrambled by C-RNTI and/or CS-RNTI.

Optionally, the processor is further configured to determine the reception mode of the retransmission data according to indication information for indicating retransmission mode of the new transmission data. When the retransmission mode is a point-to-multipoint (PTM) mode, the reception mode is a multicast reception mode; when the retransmission mode is a point-to-point (PTP) mode, the reception mode is a unicast reception mode; when the retransmission mode is the PTP mode and the PTM mode, the reception mode is the multicast reception mode and the unicast reception mode.

Optionally, the processor is further configured to extract the indication information of the retransmission mode of the new transmission data from the scheduling command for scheduling the new transmission data of the multicast service.

Optionally, the processor is further configured to, when the scheduling command of the new transmission data does not include the indication information of the retransmission mode, determine the reception mode of the retransmission data to be multicast reception mode and unicast reception mode.

Optionally, the processor is further configured to,
when using the multicast reception mode and receiving retransmission data scrambled by the multicast radio network temporary identifier G-RNTI and/or G-CS-RNTI based on the first set of DRX configuration information, start a multicast round trip time (HARQ RTT) timer; when the multicast HARQ RTT timer expires, start to monitor retransmission data scrambled by G-RNTI and/or G-CS-RNTI, and start a corresponding multicast retransmission timer;
when using the unicast reception mode and receiving retransmission data scrambled by C-RNTI and/or CS-RNTI based on the second set of DRX configuration information, start the unicast HARQ RTT timer; and when the unicast HARQ RTT timer expires, start to monitor retransmission data scrambled by C-RNTI and/or CS-RNTI, and start a corresponding unicast retransmission timer.

Optionally, the first UE communicates with the network device through carrier aggregation. Optionally, the processor is further configured to, when using the unicast reception mode and receiving retransmission data scrambled by C-RNTI and/or CS-RNTI based on the second set of DRX configuration information, determine a monitored target carrier and/or a target BWP according to indication information of a carrier and/or a bandwidth part (BWP) resource associated with the retransmission data; and monitor retransmission data scrambled by C-RNTI and/or CS-RNTI on the target carrier and/or the target BWP.

Optionally, the processor is further configured to receive retransmission data scrambled by the C-RNTI and/or CS-RNTI sent by the second network device based on the second set of DRX configuration information.

Optionally, the processor is further configured to receive and/or send data in at least one of the following ways:
according to the i-th set of DRX configuration information, after receiving data and/or signaling of the t-th service sent by the network device, starting, after a specified time or immediately, an inactive timer of the j-th set of DRX corresponding to the u-th service, and receiving and/or waiting to receive the data of the u-th service;
according to the i-th set of DRX configuration information, receiving data and/or signaling of the t-th service sent by the network device; and, before receiving the data and/or signaling of the t-th service sent by the network device or when receiving the data and/or signaling of the t-th service sent by the network device, obtaining a j-th set of DRX configuration information corresponding to the u-th service which is associated with the t-th service corresponding to the i-th set of DRX configuration information; and using the j-th set of DRX configuration information to start an inactive timer of the j-th set of DRX configuration information, and receiving and/or waiting to receive data of the u-th service.

Optionally, the transceiver is further configured to receive a first signaling sent by the network side, where the first signaling is used to update time information of the k-th set of DRX configuration information in the m sets of DRX configuration information.

Optionally, the processor is further configured to update start position information and/or cycle information of an active time in the k-th set of DRX configuration information, according to the first signaling.

Optionally, the processor is further configured to, when a time deviation between a start position of the active time of the n-th set of DRX configuration information in the m sets of DRX configuration information and an actual data transmission time of the service reaches a predetermined first threshold, adjust the DRX cycle and/or starting position in the n-th set of DRX configuration information.

Optionally, the processor is further configured to obtain time information of a valid period and time information of an invalid period of a s-th set of DRX configuration information in the m sets of DRX configuration information; within a time period indicated by the time information of the valid period of the s-th set of DRX configuration information, perform transmission or reception of data and/or signaling during the active time of the valid period; within a time period indicated by the time information of the invalid period of the valid period of the s-th set of DRX configuration information, stop at least one of transmission or reception of data and/or signaling.

Optionally, the processor is further configured to obtain time information of a service corresponding to the s-th set of DRX configuration information; determine time information of a valid period and time information of an invalid period of the s-th set of DRX configuration information according to the time information of the service corresponding to the s-th set of DRX configuration information.

Optionally, a first DRX cycle in the p-th set of DRX configuration information in the m sets of DRX configuration information includes x second DRX cycles; and configurations corresponding to the x second DRX cycles are different or partially the same or have a corresponding relationship, which may specifically include at least one of the following manners:
values of the x second DRX cycles are the same or different;
start positions of active time corresponding to the x second DRX cycles are explicitly indicated or have a corresponding relationship;
corresponding values of at least one of inactive timer, retransmission timer and active timer in the x second DRX cycles are set to be the same or different.

Optionally, the DRX cycles of x multicast services form a multicast DRX cycle, the first DRX cycle is the multicast DRX cycle, and the DRX cycle of each multicast service in the x multicast services is corresponding to one of the x second DRX cycles.

The p-th set of DRX configuration information includes at least one of: the multicast DRX cycle, a position of the DRX cycle of each multicast service in the multicast DRX cycle, DRX configuration information of each multicast service, G-RNTI corresponding to each multicast service, whether to enable HARQ feedback for PTM transmission mode corresponding to each multicast service, whether to enable HARQ retransmission for PTM for PTM transmission mode corresponding to each multicast service.

Optionally, the processor is further configured to receive data of each multicast service according to the p-th set of DRX configuration information.

It is to be noted that the device in this embodiment is a device corresponding to the above method shown in FIG. 2, and the implementation manners in the above embodiments are all applicable to the embodiments of the device, and can also achieve the same technical effects. The above device provided in the embodiment of the present disclosure can implement all the method steps implemented in the above method embodiment, and can achieve the same technical effects. Parts and beneficial effects that are the same as those in the method embodiment in this embodiment will not be specifically described here.

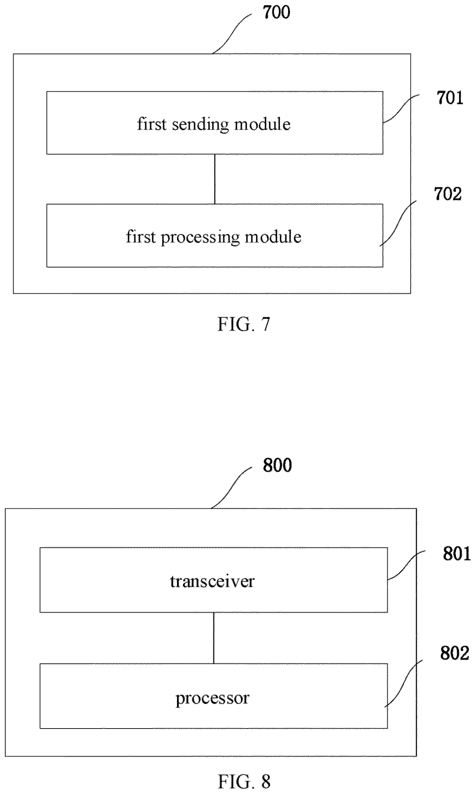

Referring to FIG. 7, one embodiment of the present disclosure further provides a network device 700, including:
a first sending module 701 configured to send m sets of DRX configuration information to a first UE; where m is an integer greater than or equal to 1, and correspondence relationship of the m sets of DRX configuration information includes at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to a service or different communication directions of different services;
a first processing module 702 configured to receive and/or send data according to the m sets of DRX configuration information.

Optionally, the first processing module is further configured to receive and/or send data according to the m sets of DRX configuration information and association relationship between at least b sets of DRX configuration information in the m sets of DRX configuration information, where b is an integer greater than 1 and less than or equal to m.

The association relationship between at least b sets of DRX configuration information is configured by the network side, or is predefined, or is sent by the first UE to the first network device.

Optionally, when the m sets of DRX configuration information correspond to different communication types, the m sets of DRX configuration information may include: the first set of DRX configuration information corresponding to the multicast mode, and the second set of DRX configuration information corresponding to the unicast mode.

The association relationship between the at least b sets of DRX configuration information includes: the first set of DRX configuration information is associated with the second set of DRX configuration information.

Optionally, the first processing module includes:
a second sending module configured to send new transmission data of the multicast service according to the first set of DRX configuration information;
a first determining module configured to, before sending the new transmission data or when sending the new transmission data, determine the retransmission mode of retransmission data; where the retransmission mode includes a PTM mode and/or a PTP mode; and
a third sending module configured to, when the first UE fails to receive the new transmission data, send the retransmission data corresponding to the new transmission data to the first UE according to the retransmission mode of the retransmission data; when using the PTM mode, based on the first set of DRX configuration information, send retransmission data scrambled by the multicast radio network temporary identifier G-RNTI and/or G-CS-RNTI; when using the PTP mode, based on the second set of DRX configuration information, send retransmission data scrambled by the C-RNTI and/or CS-RNTI.

Optionally, the network device further includes:
a first indication module configured to carry indication information of the retransmission mode of the new transmission data in the scheduling command for scheduling the new transmission data of the multicast service, thereby helping the UE to determine reception mode of the retransmission data.

Optionally, the first UE communicates with the network device through carrier aggregation. The network device further includes:
a fourth sending module configured to send to the first UE, indication information of a carrier and/or a bandwidth part (BWP) resource associated with the retransmission data, so that the first UE determines a monitored target carrier and/or a target BWP.

Optionally, the third sending module is further configured to send the retransmission data scrambled by the C-RNTI and/or CS-RNTI through the second network device.

Optionally, the first processing module is further configured to receive and/or send data in at least one of the following ways:
after sending data and/or signaling of the t-th service according to the i-th set of DRX configuration information, starting, after a specified time or immediately, an inactivity timer of the j-th set of DRX corresponding to the u-th service, and sending and/or waiting to send data of the u-th service;
after sending data and/or signaling of the t-th service according to the i-th set of DRX configuration information; and before sending the data and/or signaling of the t-th service or when sending the data and/or signaling of the t-th service, obtaining the j-th set of DRX configuration information corresponding to the u-th service associated with the t-th service corresponding to the i-th set of DRX configuration information; and using the j-th set of DRX configuration information to start an inactive timer of the j-th set of DRX configuration information, and sending and/or waiting to send data of the u-th service.

Optionally, the network device further includes:
a fifth sending module configured to send a first signaling to the first UE, where the first signaling is used to update time information of the k-th set of DRX configuration information in the m sets of DRX configuration information.

Optionally, the fifth sending module is further configured to, when a time deviation between a start position of the active time of the k-th set of DRX configuration information and an actual data transmission time of the service reaches a predetermined first threshold, adjust the DRX cycle and/or start position in the k-th set of DRX configuration information, and send the first signaling.

Optionally, the network device further includes:
a first obtaining module configured to obtain time information of a valid period and time information of an invalid period of the s-th set of DRX configuration information in the m sets of DRX configuration information.

The first processing module is further configured to, within a time period indicated by the time information of the valid period of the s-th set of DRX configuration information, send or receive data and/or signaling during an active time of the valid period; within a time period indicated by the time information of the invalid period of the s-th set of DRX configuration information, stop sending or receiving at least one of data and/or signaling.

Optionally, the network device further includes:
a first configuration module configured to configure the time information of the valid period and the time information of the invalid period of the k-th set of DRX configuration information for the first UE through RRC dedicated signaling.

Optionally, the first obtaining module is further configured to obtain time information of a service corresponding to the s-th set of DRX configuration information, and then determine time information of a valid period and time information of an invalid period of the s-th set of DRX configuration information according to the time information of the service corresponding to the s-th set of DRX configuration information.

Optionally, a first DRX cycle in the p-th set of DRX configuration information in the m sets of DRX configuration information includes x second DRX cycles; and configurations corresponding to the x second DRX cycles are different or partially the same or have a corresponding relationship, which may specifically include at least one of the following manners:
values of the x second DRX cycles are the same or different;
start positions of active time corresponding to the x second DRX cycles are explicitly indicated or have a corresponding relationship;
corresponding values of at least one of inactive timer, retransmission timer and active timer in the x second DRX cycles are set to be the same or different.

Optionally, the DRX cycles of x multicast services form a multicast DRX cycle, the first DRX cycle is the multicast DRX cycle, and the DRX cycle of each multicast service in the x multicast services is corresponding to one of the x second DRX cycles.

The p-th set of DRX configuration information includes at least one of: the multicast DRX cycle, a position of the DRX cycle of each multicast service in the multicast DRX cycle, DRX configuration information of each multicast service, G-RNTI corresponding to each multicast service, whether to enable HARQ feedback for the PTM transmission mode corresponding to each multicast service, and whether to enable HARQ retransmission in the PTM transmission mode corresponding to each multicast service.

The first processing module is further configured to send data of each multicast service according to the p-th set of DRX configuration information.

It is to be noted that the device in this embodiment is a device corresponding to the above method shown in FIG. 4, and the implementation manners in the above embodiments are all applicable to the embodiments of the device, and can also achieve the same technical effects. The above device provided in the embodiment of the present disclosure can implement all the method steps implemented in the above method embodiment, and can achieve the same technical effects. Parts and beneficial effects that are the same as those in the method embodiment in this embodiment will not be specifically described here.

Referring to FIG. 8, one embodiment of the present disclosure further provides a network device 800, including: a transceiver 801 and a processor 802.

The transceiver 801 is configured to send m sets of DRX configuration information to a first UE; where m is an integer greater than or equal to 1, and correspondence relationship of the m sets of DRX configuration information includes at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to a service or different communication directions of different services;
a first processing module 702 configured to receive and/or send data according to the m sets of DRX configuration information.

The processor 802 is configured to receive and/or send data according to the m sets of DRX configuration information.

Optionally, the processor is further configured to receive and/or send data according to the m sets of DRX configuration information and association relationship between at least b sets of DRX configuration information in the m sets of DRX configuration information, where b is an integer greater than 1 and less than or equal to m.

The association relationship between at least b sets of DRX configuration information is configured by the network side, or is predefined, or is sent by the first UE to the first network device.

Optionally, when the m sets of DRX configuration information correspond to different communication types, the m sets of DRX configuration information may include: the first set of DRX configuration information corresponding to the multicast mode, and the second set of DRX configuration information corresponding to the unicast mode.

The association relationship between the at least b sets of DRX configuration information includes: the first set of DRX configuration information is associated with the second set of DRX configuration information.

Optionally, the processor is further configured to,
send new transmission data of the multicast service according to the first set of DRX configuration information;
before sending the new transmission data or when sending the new transmission data, determine the retransmission mode of retransmission data; where the retransmission mode includes a PTM mode and/or a PTP mode; and
when the first UE fails to receive the new transmission data, send the retransmission data corresponding to the new transmission data to the first UE according to the retransmission mode of the retransmission data; when using the PTM mode, based on the first set of DRX configuration information, send retransmission data scrambled by the multicast radio network temporary identifier G-RNTI and/or G-CS-RNTI; when using the PTP mode, based on the second set of DRX configuration information, send retransmission data scrambled by the C-RNTI and/or CS-RNTI.

Optionally, the processor is further configured to carry indication information of the retransmission mode of the new transmission data in the scheduling command for scheduling the new transmission data of the multicast service.

Optionally, the first UE communicates with the network device through carrier aggregation. The processor is further configured to send to the first UE, indication information of a carrier and/or a bandwidth part (BWP) resource associated with the retransmission data, so that the first UE determines a monitored target carrier and/or a target BWP.

Optionally, the processor is further configured to send the retransmission data scrambled by the C-RNTI and/or CS-RNTI through the second network device.

Optionally, the processor is further configured to receive and/or send data in at least one of the following ways:
after sending data and/or signaling of the t-th service according to the i-th set of DRX configuration information, starting, after a specified time or immediately, an inactivity timer of the j-th set of DRX corresponding to the u-th service, and sending and/or waiting to send data of the u-th service;
after sending data and/or signaling of the t-th service according to the i-th set of DRX configuration information; and before sending the data and/or signaling of the t-th service or when sending the data and/or signaling of the t-th service, obtaining the j-th set of DRX configuration information corresponding to the u-th service associated with the t-th service corresponding to the i-th set of DRX configuration information; and using the j-th set of DRX configuration information to start an inactive timer of the j-th set of DRX configuration information, and sending and/or waiting to send data of the u-th service.

Optionally, the processor is further configured to send a first signaling to the first UE, where the first signaling is used to update time information of the k-th set of DRX configuration information in the m sets of DRX configuration information.

Optionally, the processor is further configured to, when a time deviation between a start position of the active time of the k-th set of DRX configuration information and an actual data transmission time of the service reaches a predetermined first threshold, adjust the DRX cycle and/or start position in the k-th set of DRX configuration information, and send the first signaling.

Optionally, the processor is further configured to,
obtain time information of a valid period and time information of an invalid period of the s-th set of DRX configuration information in the m sets of DRX configuration information;
within a time period indicated by the time information of the valid period of the s-th set of DRX configuration information, send or receive data and/or signaling during an active time of the valid period; wthin a time period indicated by the time information of the invalid period of the s-th set of DRX configuration information, stop sending or receiving at least one of data and/or signaling.

Optionally, the processor is further configured to configure the time information of the valid period and the time information of the invalid period of the k-th set of DRX configuration information for the first UE through RRC dedicated signaling.

Optionally, the processor is further configured to obtain time information of a service corresponding to the s-th set of DRX configuration information, and then determine time information of a valid period and time information of an invalid period of the s-th set of DRX configuration information according to the time information of the service corresponding to the s-th set of DRX configuration information.

Optionally, a first DRX cycle in the p-th set of DRX configuration information in the m sets of DRX configuration information includes x second DRX cycles; and configurations corresponding to the x second DRX cycles are different or partially the same or have a corresponding relationship, which may specifically include at least one of the following manners:
values of the x second DRX cycles are the same or different;
start positions of active time corresponding to the x second DRX cycles are explicitly indicated or have a corresponding relationship;
corresponding values of at least one of inactive timer, retransmission timer and active timer in the x second DRX cycles are set to be the same or different.

Optionally, the DRX cycles of x multicast services form a multicast DRX cycle, the first DRX cycle is the multicast DRX cycle, and the DRX cycle of each multicast service in the x multicast services is corresponding to one of the x second DRX cycles.

The p-th set of DRX configuration information includes at least one of: the multicast DRX cycle, a position of the DRX cycle of each multicast service in the multicast DRX cycle, DRX configuration information of each multicast service, G-RNTI corresponding to each multicast service, whether to enable HARQ feedback for the PTM transmission mode corresponding to each multicast service, and whether to enable HARQ retransmission in the PTM transmission mode corresponding to each multicast service.

The processor is further configured to send data of each multicast service according to the p-th set of DRX configuration information.

It is to be noted that the device in this embodiment is a device corresponding to the above method shown in FIG. 4, and the implementation manners in the above embodiments are all applicable to the embodiments of the device, and can also achieve the same technical effects. The above device provided in the embodiment of the present disclosure can implement all the method steps implemented in the above method embodiment, and can achieve the same technical effects. Parts and beneficial effects that are the same as those in the method embodiment in this embodiment will not be specifically described here.

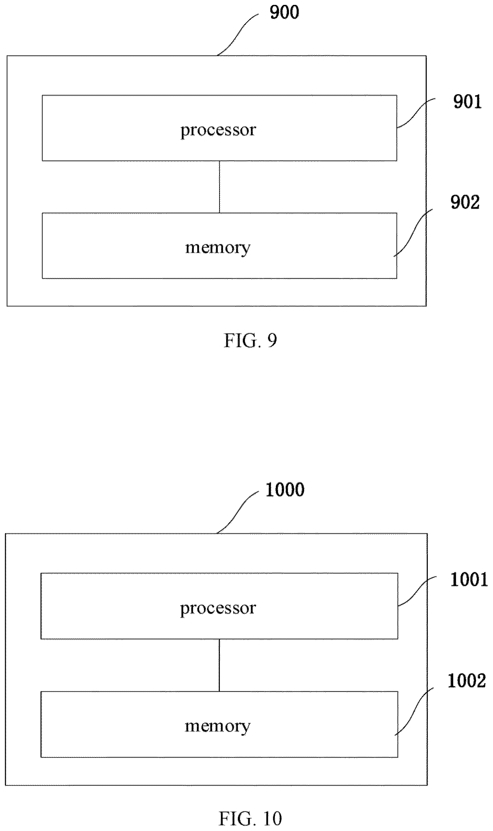

Referring to FIG. 9, one embodiment of the present disclosure further provides a UE 900, including a processor 901, a memory 902 and a computer program stored in the memory 902 and executable on the processor 901. The computer program, when executed by the processor 901, causes the UE to perform each process of the above embodiment of the discontinuous reception scheduling method, and the same technical effect can be achieved. To avoid repetition, details are not repeated here.

Referring to FIG. 10, one embodiment of the present disclosure further provides a network device 1000, including a processor 1001, a memory 1002 and a computer program stored in the memory 1002 and executable on the processor 1001. The computer program, when executed by the processor 1001, causes the network device to perform each process of the above embodiment of the discontinuous reception scheduling method, and the same technical effect can be achieved. To avoid repetition, details are not repeated here.

One embodiment of the present disclosure further provides a computer-readable storage medium, including a computer program stored thereon. The computer program, when executed by a processor, causes the processor to perform each process of the above embodiment of the discontinuous reception scheduling method and the same technical effect can be achieved. To avoid repetition, details are not repeated here. The computer-readable storage medium is, for example, a read-only memory (ROM), a random access memory (RAM), a magnetic disk or an optical disk, and the like.

It is to be noted that, in the present disclosure, the terms "include", "including" or any other variations thereof are intended to cover a non-exclusive inclusion, such that a process, method, article or device that includes a series of elements not only includes those elements, but also includes other elements which not expressly listed or inherent to the process, method, article or device. Without further limitations, an element defined by a statement "includes a..." does not exclude presence of additional identical elements in a process, method, article or device that includes that element.

Through the above description of the embodiments, those skilled in the art can clearly understand that the methods of the above embodiments may be implemented by means of software plus necessary general hardware platform, of course, implemented by hardware, but in many cases the former is better. According to such understanding, the essence of the technical solution of the present disclosure or the part that contributes to the related art may be embodied in the form of a software product. The computer software product is stored in a storage medium (such as ROM/RAM, magnetic disk, optical disk), and includes several instructions which enables a terminal (which may be a mobile phone, computer, server, air conditioner, or network device, etc.) to execute the methods described in various embodiments of the present disclosure.

The embodiments of the present disclosure have been described above in conjunction with the accompanying drawings, but the present disclosure is not limited to the above-mentioned embodiments. The above-mentioned embodiments are only illustrative, not restrictive. In view of the present disclosure, without departing from the spirit of the present disclosure and the protection scope of the claims, many forms can be made, all of which are within the protection of the present disclosure.

## Claims

1. A discontinuous reception (DRX) scheduling method, comprising:
receiving, by a first user equipment (UE), m sets of DRX configuration information configured by a network side; wherein m is an integer greater than or equal to 1, and the m sets of DRX configuration information have a correspondence relationship including at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to different communication directions of a service or different services;
receiving and/or sending data, by the first UE, according to the m sets of DRX configuration information.

2. The method according to claim 1, wherein the receiving and/or sending data, by the first UE, according to the m sets of DRX configuration information, includes:
receiving and/or sending the data according to the m sets of DRX configuration information and association relationship between at least b sets of DRX configuration information in the m sets of DRX configuration information, wherein b is an integer greater than 1 and less than or equal to m;
wherein the association relationship between the at least b sets of DRX configuration information is sent to the first UE by the network side through signaling, or is predefined, or is sent to a radio access layer of the first UE from a high layer of the first UE.

3. The method according to claim 2, wherein the association relationship between the at least b sets of DRX configuration information includes at least one of the following:
after receiving or sending data and/or signaling of a t-th service during an active time indicated by an i-th set of DRX configuration information in the m-sets of DRX configuration information, starting, after a specified time or immediately, an inactivity timer of a j-th set of DRX configuration information corresponding to a u-th service, and receiving and/or waiting to receive data and/or signaling of the u-th service;
after receiving or sending data and/or signaling of a t-th service during an active time indicated by an i-th set of DRX configuration information in the m-sets of DRX configuration information, entering, after a specified time or immediately, an activity time of a j-th set of DRX configuration information corresponding to a u-th service, and receiving and/or waiting to receive data and/or signaling of the u-th service;
after receiving or sending data and/or signaling of a t-th service during an active time indicated by an i-th set of DRX configuration information in the m-sets of DRX configuration information, starting, after a specified time or immediately, an on-duration timer of a j-th set of DRX configuration information corresponding to a u-th service, and receiving and/or waiting to receive data and/or signaling of the u-th service;
after receiving or sending data and/or signaling of a t-th service during an active time indicated by an i-th set of DRX configuration information in the m-sets of DRX configuration information, according to data arrival characteristics and/or service performance requirements of an associated u-th service, performing at least one of starting an inactive timer of a j-th set of DRX configuration information corresponding to the u-th service, starting an on-duration timer of the j-th set of DRX configuration information and entering an active time of the j-th set of DRX configuration information, and receiving and/or waiting to receive data and/or signaling of the u-th service.

4. The method according to claim 2, wherein the association relationship between the at least b sets of DRX configuration information includes at least one of the following:
after receiving or sending a v-th type data and/or signaling of a q-th service during an active time indicated by an h-th set of DRX configuration information in the m sets of DRX configuration information, starting, after a specified time or immediately, an inactive timer of a z-th set of DRX configuration information corresponding to a u-th type data and/or signaling of the q-th service, and receiving and/or waiting to receive the u-th type data and/or signaling of the q-th service;
after receiving or sending a v-th type data and/or signaling of a q-th service during an active time indicated by an h-th set of DRX configuration information in the m sets of DRX configuration information, entering, after a specified time or immediately, an active time of a z-th set of DRX configuration information corresponding to a u-th type of the q-th service, and receiving and/or waiting to receive the u-th type data and/or signaling of the q-th service;
after receiving or sending a v-th type data and/or signaling of a q-th service during an active time indicated by an h-th set of DRX configuration information in the m sets of DRX configuration information, starting, after a specified time or immediately, an on-duration timer of a z-th set of DRX configuration information corresponding to a u-th type in the first service, and receiving and/or waiting to receive the u-th type data and/or signaling of the q-th service;
after receiving or sending a v-th type data and/or signaling of a q-th service during an active time indicated by an h-th set of DRX configuration information in the m sets of DRX configuration information, according to service performance requirements including arrival characteristics and/or delay of a u-th type data of an associated q-th service, performing at least one of starting an inactive timer of a z-th set of DRX configuration information corresponding to the u-th type in the q-th service, starting on-duration timer of the z-th set of DRX configuration information and entering an active time of the z-th set of DRX configuration information, and receiving and/or waiting to receive the u-th type data and/or signaling in the q-th service.

5. The method according to claim 2, wherein when the m sets of DRX configuration information correspond to different communication types, the m sets of DRX configuration information include: a first set of DRX configuration information corresponding to a multicast mode, and a second set of DRX configuration information corresponding to a unicast mode;
the association relationship between the at least b sets of DRX configuration information includes: the first set of DRX configuration information is associated with the second set of DRX configuration information.

6. The method according to claim 5, wherein the receiving and/or sending the data according to the m sets of DRX configuration information and association relationship between at least b sets of DRX configuration information in the m sets of DRX configuration information, includes:
receiving, by the first UE, new transmission data of a multicast service sent by a network device according to the first set of DRX configuration information; and, before receiving the new transmission data or during reception of the new transmission data, determining a reception mode of retransmission data, wherein the reception mode of the retransmission data includes: a multicast reception mode and/or a unicast reception mode;
in case that the first UE fails to receive the new transmission data, according to the reception mode of the retransmission data, monitoring PDCCH scheduling signaling corresponding to the retransmission data and receives the retransmission data; when using the multicast reception mode, based on the first set of DRX configuration information, receiving retransmission data scrambled by group-radio network temporary identify (G-RNTI) and/or Group Configured Scheduling RNTI (G-CS-RNTI); when using the unicast reception mode, based on the second set of DRX configuration information, receiving retransmission data scrambled by C-RNTI and/or CS-RNTI.

7. The method according to claim 6, wherein the determining a reception mode of retransmission data, includes:
determining, by the first UE, the reception mode of the retransmission data according to indication information for indicating retransmission mode of the new transmission data; wherein when the retransmission mode is a point-to-multipoint (PTM) mode, the reception mode is a multicast reception mode; when the retransmission mode is a point-to-point (PTP) mode, the reception mode is a unicast reception mode; when the retransmission mode is the PTP mode and the PTM mode, the reception mode is the multicast reception mode and the unicast reception mode.

8. The method according to claim 7, further comprising:
extracting, by the first UE, the indication information for indicating retransmission mode of the new transmission data from a scheduling command for scheduling the new transmission data of the multicast service.

9. The method according to claim 7, wherein the determining a reception mode of retransmission data, further includes:
when the scheduling command of the new transmission data does not include the indication information of the retransmission mode, determining the reception mode of the retransmission data to be multicast reception mode and unicast reception mode.

10. The method according to claim 6, wherein
when using the multicast reception mode, based on the first set of DRX configuration information, receiving retransmission data scrambled by group-radio network temporary identify (G-RNTI) and/or Group Configured Scheduling RNTI (G-CS-RNTI), includes: starting a multicast round trip time (HARQ RTT) timer; when the multicast HARQ RTT timer expires, starting to monitor retransmission data scrambled by G-RNTI and/or G-CS-RNTI, and starting a corresponding multicast retransmission timer;
when using the unicast reception mode, based on the second set of DRX configuration information, receiving retransmission data scrambled by C-RNTI and/or CS-RNTI, includes: starting a unicast HARQ RTT timer; and when the unicast HARQ RTT timer expires, starting to monitor retransmission data scrambled by C-RNTI and/or CS-RNTI, and starting a corresponding unicast retransmission timer.

11. The method according to claim 10, wherein the first UE communicates with the network device through carrier aggregation; when using the unicast reception mode, based on the second set of DRX configuration information, receiving retransmission data scrambled by C-RNTI and/or CS-RNTI, further includes:
determining a monitored target carrier and/or a target BWP according to indication information of a carrier and/or a bandwidth part (BWP) resource associated with the retransmission data; and monitoring retransmission data scrambled by C-RNTI and/or CS-RNTI on the target carrier and/or the target BWP.

12. The method according to claim 6, wherein
the new transmission data of the multicast service is sent by the first network device;
based on the second set of DRX configuration information, receiving retransmission data scrambled by C-RNTI and/or CS-RNTI, includes: based on the second set of DRX configuration information, receiving retransmission data scrambled by C-RNTI and/or CS-RNTI and sent by a second network device.

13. The method according to claim 3, wherein the receiving and/or sending, by the first UE, the data according to the m sets of DRX configuration information and association relationship between at least b sets of DRX configuration information in the m sets of DRX configuration information, includes:
according to an i-th set of DRX configuration information, after the first UE receives data and/or signaling of a t-th service sent by the network device, starting, after a specified time or immediately, an inactive timer of a j-th set of DRX corresponding to a u-th service, and receiving and/or waiting to receive data of the u-th service;
according to an i-th set of DRX configuration information, receiving data and/or signaling of a t-th service sent by the network device; and, before receiving the data and/or signaling of the t-th service sent by the network device or when receiving the data and/or signaling of the t-th service sent by the network device, obtaining a j-th set of DRX configuration information corresponding to a u-th service which is associated with the t-th service corresponding to the i-th set of DRX configuration information; and using the j-th set of DRX configuration information to start an inactive timer of the j-th set of DRX configuration information, and receiving and/or waiting to receive data of the u-th service.

14. The method according to claim 1, further comprising:
receiving a first signaling sent by the network side, wherein the first signaling is used to update time information of a k-th set of DRX configuration information in the m sets of DRX configuration information;
updating, by the first UE, start position information and/or cycle information of an active time in the k-th set of DRX configuration information, according to the first signaling.

15. The method according to claim 14, wherein the time information updated by the first signaling is related to time information of a target service corresponding to a target logical channel, and the target logical channel is a logical channel corresponding to the k-th set of DRX configuration information.

16. The method according to claim 1, further comprising:
when a time deviation between a start position of an active time of an n-th set of DRX configuration information in the m sets of DRX configuration information and an actual data transmission time of a service reaches a predetermined first threshold, adjusting a DRX cycle and/or a starting position in the n-th set of DRX configuration information.

17. The method according to claim 1, further comprising:
obtaining time information of a valid period and time information of an invalid period of an s-th set of DRX configuration information in the m sets of DRX configuration information;
wherein the receiving and/or sending data, by the first UE, according to the m sets of DRX configuration information, includes:
within a time period indicated by the time information of the valid period of the s-th set of DRX configuration information, performing transmission or reception of data and/or signaling during the active time of the valid period;
within a time period indicated by the time information of the invalid period of the valid period of the s-th set of DRX configuration information, stopping at least one of transmission or reception of data and/or signaling.

18. The method according to claim 17, wherein the obtaining time information of a valid period and time information of an invalid period of an s-th set of DRX configuration information in the m sets of DRX configuration information, includes:
obtaining time information of a service corresponding to the s-th set of DRX configuration information;
determining time information of a valid period and time information of an invalid period of the s-th set of DRX configuration information according to the time information of the service corresponding to the s-th set of DRX configuration information.

19. The method according to claim 1, wherein
a first DRX cycle in a p-th set of DRX configuration information in the m sets of DRX configuration information includes x second DRX cycles, wherein x is an integer greater than 1; and configurations corresponding to the x second DRX cycles are different or partially the same or have a corresponding relationship, which includes at least one of the following manners:
values of the x second DRX cycles are the same or different;
start positions of active time corresponding to the x second DRX cycles are explicitly indicated or have a corresponding relationship;
corresponding values of at least one of inactive timer, retransmission timer and active timer in the x second DRX cycles are set to be the same or different.

20. The method according to claim 19, wherein
DRX cycles of x multicast services form a multicast DRX cycle, the first DRX cycle is the multicast DRX cycle, and DRX cycle of each multicast service in the x multicast services is corresponding to one of the x second DRX cycles;
the p-th set of DRX configuration information includes at least one of: the multicast DRX cycle, a position of the DRX cycle of each multicast service in the multicast DRX cycle, DRX configuration information of each multicast service, G-RNTI corresponding to each multicast service, whether to enable HARQ feedback for PTM transmission mode corresponding to each multicast service, whether to enable HARQ retransmission for PTM for PTM transmission mode corresponding to each multicast service;
wherein the method further includes: receiving data of each multicast service according to the p-th set of DRX configuration information.

21. A discontinuous reception (DRX) scheduling method, comprising:
sending, by a first network device, to a first user equipment (UE), m sets of DRX configuration information; wherein m is an integer greater than or equal to 1, and the m sets of DRX configuration information have a correspondence relationship including at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to different communication directions of a service or different services;
receiving and/or sending data, by the first network device, according to the m sets of DRX configuration information.

22. The method according to claim 21, wherein the receiving and/or sending data, by the first network device, according to the m sets of DRX configuration information, includes:
receiving and/or sending the data, by the first network device, according to the m sets of DRX configuration information and association relationship between at least b sets of DRX configuration information in the m sets of DRX configuration information, wherein b is an integer greater than 1 and less than or equal to m;
wherein the association relationship between the at least b sets of DRX configuration information is configured by the network side, or is predefined, or is sent to the first network device from the first UE.

23. The method according to claim 22, wherein the association relationship between the at least b sets of DRX configuration information includes at least one of the following:
after receiving or sending data and/or signaling of a t-th service during an active time indicated by an i-th set of DRX configuration information in the m-sets of DRX configuration information, starting, after a specified time or immediately, an inactivity timer of a j-th set of DRX configuration information corresponding to a u-th service, and receiving and/or waiting to receive data and/or signaling of the u-th service;
after receiving or sending data and/or signaling of a t-th service during an active time indicated by an i-th set of DRX configuration information in the m-sets of DRX configuration information, entering, after a specified time or immediately, an activity time of a j-th set of DRX configuration information corresponding to a u-th service, and receiving and/or waiting to receive data and/or signaling of the u-th service;
after receiving or sending data and/or signaling of a t-th service during an active time indicated by an i-th set of DRX configuration information in the m-sets of DRX configuration information, starting, after a specified time or immediately, an on-duration timer of a j-th set of DRX configuration information corresponding to a u-th service, and receiving and/or waiting to receive data and/or signaling of the u-th service;
after receiving or sending data and/or signaling of a t-th service during an active time indicated by an i-th set of DRX configuration information in the m-sets of DRX configuration information, according to data arrival characteristics and/or service performance requirements of an associated u-th service, performing at least one of starting an inactive timer of a j-th set of DRX configuration information corresponding to the u-th service, starting an on-duration timer of the j-th set of DRX configuration information and entering an active time of the j-th set of DRX configuration information, and receiving and/or waiting to receive data and/or signaling of the u-th service.

24. The method according to claim 22, wherein the association relationship between the at least b sets of DRX configuration information includes at least one of the following:
after receiving or sending a v-th type data and/or signaling of a q-th service during an active time indicated by an h-th set of DRX configuration information in the m sets of DRX configuration information, starting, after a specified time or immediately, an inactive timer of a z-th set of DRX configuration information corresponding to a u-th type data and/or signaling of the q-th service, and receiving and/or waiting to receive the u-th type data and/or signaling of the q-th service;
after receiving or sending a v-th type data and/or signaling of a q-th service during an active time indicated by an h-th set of DRX configuration information in the m sets of DRX configuration information, entering, after a specified time or immediately, an active time of a z-th set of DRX configuration information corresponding to a u-th type of the q-th service, and receiving and/or waiting to receive the u-th type data and/or signaling of the q-th service;
after receiving or sending a v-th type data and/or signaling of a q-th service during an active time indicated by an h-th set of DRX configuration information in the m sets of DRX configuration information, starting, after a specified time or immediately, an on-duration timer of a z-th set of DRX configuration information corresponding to a u-th type in the first service, and receiving and/or waiting to receive the u-th type data and/or signaling of the q-th service;
after receiving or sending a v-th type data and/or signaling of a q-th service during an active time indicated by an h-th set of DRX configuration information in the m sets of DRX configuration information, according to service performance requirements including arrival characteristics and/or delay of a u-th type data of an associated q-th service, performing at least one of starting an inactive timer of a z-th set of DRX configuration information corresponding to the u-th type in the q-th service, starting on-duration timer of the z-th set of DRX configuration information and entering an active time of the z-th set of DRX configuration information, and receiving and/or waiting to receive the u-th type data and/or signaling in the q-th service.

25. The method according to claim 22, wherein when the m sets of DRX configuration information correspond to different communication types, the m sets of DRX configuration information include: a first set of DRX configuration information corresponding to a multicast mode, and a second set of DRX configuration information corresponding to a unicast mode;
the association relationship between the at least b sets of DRX configuration information includes: the first set of DRX configuration information is associated with the second set of DRX configuration information.

26. The method according to claim 25, wherein the receiving and/or sending the data according to the m sets of DRX configuration information and association relationship between at least b sets of DRX configuration information in the m sets of DRX configuration information, includes:
sending, by the first network device, new transmission data of a multicast service according to the first set of DRX configuration information; and, before sending the new transmission data or during transmission of the new transmission data, determining a retransmission mode of retransmission data, wherein the retransmission mode of the retransmission data includes: a PTM mode and/or a PTP mode;
when the first UE fails to receive the new transmission data, sending, by the first network device, the retransmission data corresponding to the new transmission data to the first UE according to the retransmission mode of the retransmission data; when using the PTM mode, based on the first set of DRX configuration information, sending retransmission data scrambled by the multicast radio network temporary identifier G-RNTI and/or G-CS-RNTI; when using the PTP mode, based on the second set of DRX configuration information, sending retransmission data scrambled by the C-RNTI and/or CS-RNTI.

27. The method according to claim 26, further comprising:
carrying, by the first network device, indication information of the retransmission mode of the new transmission data in a scheduling command for scheduling the new transmission data of the multicast service.

28. The method according to claim 26, wherein the first UE communicates with the network device through carrier aggregation; when using the PTP mode, based on the second set of DRX configuration information, sending retransmission data scrambled by the C-RNTI and/or CS-RNTI, includes:
sending to the first UE, indication information of a carrier and/or a bandwidth part (BWP) resource associated with the retransmission data, so that the first UE determines a monitored target carrier and/or a target BWP.

29. The method according to claim 26, wherein based on the second set of DRX configuration information, sending retransmission data scrambled by the C-RNTI and/or CS-RNTI, includes:
sending, by the first network device, the retransmission data scrambled by the C-RNTI and/or CS-RNTI through a second network device.

30. The method according to claim 23, wherein the receiving and/or sending data, by the first network device, according to the m sets of DRX configuration information and association relationship between at least b sets of DRX configuration information in the m sets of DRX configuration information, includes at least one of the following:
after the first network device sends data and/or signaling of a t-th service according to an i-th set of DRX configuration information, starting, after a specified time or immediately, an inactivity timer of a j-th set of DRX corresponding to a u-th service, and sending and/or waiting to send data of the u-th service;
after the first network device sends data and/or signaling of a t-th service according to an i-th set of DRX configuration information; and before sending the data and/or signaling of the t-th service or when sending the data and/or signaling of the t-th service, obtaining a j-th set of DRX configuration information corresponding to a u-th service associated with the t-th service corresponding to the i-th set of DRX configuration information; and using the j-th set of DRX configuration information to start an inactive timer of the j-th set of DRX configuration information, and sending and/or waiting to send data of the u-th service.

31. The method according to claim 21, further comprising:
sending, by the network device, a first signaling to the first UE, wherein the first signaling is used to update time information of a k-th set of DRX configuration information in the m sets of DRX configuration information.

32. The method according to claim 31, wherein the time information updated by the first signaling is related to time information of a target service corresponding to a target logical channel, and the target logical channel is a logical channel corresponding to the k-th set of DRX configuration information.

33. The method according to claim 31, further comprising:
when a time deviation between a start position of an active time of a k-th set of DRX configuration information and an actual data transmission time of a service reaches a predetermined first threshold, adjusting, by the first network, a DRX cycle and/or a start position in the k-th set of DRX configuration information, and sending the first signaling.

34. The method according to claim 21, further comprising:
obtaining, by the first network device, time information of a valid period and time information of an invalid period of an s-th set of DRX configuration information in the m sets of DRX configuration information;
within a time period indicated by the time information of the valid period of the s-th set of DRX configuration information, sending or receiving data and/or signaling during an active time of the valid period;
within a time period indicated by the time information of the invalid period of the s-th set of DRX configuration information, stopping sending or receiving at least one of data and/or signaling.

35. The method according to claim 34, wherein the obtaining time information of a valid period and time information of an invalid period of an s-th set of DRX configuration information in the m sets of DRX configuration information, includes:
obtaining time information of a service corresponding to the s-th set of DRX configuration information;
determining time information of a valid period and time information of an invalid period of the s-th set of DRX configuration information according to the time information of the service corresponding to the s-th set of DRX configuration information.

36. The method according to claim 21, wherein
a first DRX cycle in a p-th set of DRX configuration information in the m sets of DRX configuration information includes x second DRX cycles; and configurations corresponding to the x second DRX cycles are different or partially the same or have a corresponding relationship, which includes at least one of the following manners:
values of the x second DRX cycles are the same or different;
start positions of active time corresponding to the x second DRX cycles are explicitly indicated or have a corresponding relationship;
corresponding values of at least one of inactive timer, retransmission timer and active timer in the x second DRX cycles are set to be the same or different.

37. The method according to claim 36, wherein
DRX cycles of x multicast services form a multicast DRX cycle, the first DRX cycle is the multicast DRX cycle, and DRX cycle of each multicast service in the x multicast services is corresponding to one of the x second DRX cycles;
the p-th set of DRX configuration information includes at least one of: the multicast DRX cycle, a position of the DRX cycle of each multicast service in the multicast DRX cycle, DRX configuration information of each multicast service, G-RNTI corresponding to each multicast service, whether to enable HARQ feedback for PTM transmission mode corresponding to each multicast service, whether to enable HARQ retransmission for PTM for PTM transmission mode corresponding to each multicast service;
wherein the method further includes: sending, by the first network device, data of each multicast service according to the p-th set of DRX configuration information.

38. A user equipment (UE), comprising: a transceiver and a processor;
wherein the transceiver is configured to receive m sets of DRX configuration information configured by a network side; wherein m is an integer greater than or equal to 1, and the m sets of DRX configuration information have a correspondence relationship including at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to different communication directions of a service or different services;
the processor is configured to receive and/or send data according to the m sets of DRX configuration information.

39. A user equipment (UE), comprising: a processor, a memory, and a program stored on the memory and executable on the processor; wherein the program, when executed by the processor, causes the UE to perform the steps of the method according to any one of claims 1 to 20.

40. A network device, comprising: a transceiver and a processor;
wherein the transceiver is configured to send m sets of DRX configuration information to a first user equipment (UE); wherein m is an integer greater than or equal to 1, and the m sets of DRX configuration information have a correspondence relationship including at least one of the following:
the m sets of DRX configuration information correspond to different communication types;
the m sets of DRX configuration information correspond to different service types;
the m sets of DRX configuration information correspond to different scheduling modes;
the m sets of DRX configuration information correspond to different frame types or data types of a service;
the m sets of DRX configuration information correspond to different communication directions of a service or different services;
the processor is configured to receive and/or send data according to the m sets of DRX configuration information.

41. A network device, comprising: a processor, a memory, and a program stored on the memory and executable on the processor; wherein the program, when executed by the processor, causes the network device to perform the steps of the method according to any one of claims 21 to 37.

42. A computer-readable storage medium, comprising a computer program stored thereon; wherein the computer program, when executed by a processor, causes the processor to perform the steps of the method according to any one of claims 1 to 37.
